# EUROPEAN PATENT SPECIFICATION

(11) **EP 3 041 293 B1**
(45) Date of publication and mention of the grant of the patent: **22.07.2020**
(21) Application number: 13892367.7
(22) Date of filing: 30.08.2013
(51) Int. Cl.: H04W 48/16, H04W 84/12

(54) **WTP ACCESS METHOD, MANAGEMENT METHOD, APPARATUS AND SYSTEM**
WTP-ZUGRIFFSVERFAHREN, VERWALTUNGSVERFAHREN, VORRICHTUNG UND SYSTEM
PROCÉDÉ D'ACCÈS PAR WTP, PROCÉDÉ DE GESTION, APPAREIL ET SYSTÈME

(43) Date of publication of application: 06.07.2016
(73) Proprietor: Huawei Technologies Co., Ltd., Longgang District Shenzhen, Guangdong 518129 (CN)
(72) Inventor: TANG, Houcheng, Shenzhen Guangdong 518129 (CN); YANG, Hui, Shenzhen Guangdong 518129 (CN); ZHEN, Bin, Shenzhen Guangdong 518129 (CN)
(74) Representative: Isarpatent
(86) International application number: PCT/CN2013/082642
(87) International publication number: WO 2015/027456

(56) References cited:
- CN-A- 102 316 488
- CN-A- 102 333 357
- CN-A- 102 421 166
- CALHOUN P ET AL: "CAPWAP Protocol Specification; draft-ietf-capwap-protocol-specification-0 6.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, vol. capwap, no. 6, 1 April 2007 (2007-04-01), XP015049228, ISSN: 0000-0004
- BERNASCHI M ET AL: "OpenCAPWAP: An open source CAPWAP implementation for the management and configuration of WiFi hot-spots", COMPUTER NETWORKS, ELSEVIER SCIENCE PUBLISHERS B.V., AMSTERDAM, NL, vol. 53, no. 2, 13 February 2009 (2009-02-13), pages 217-230, XP025846109, ISSN: 1389-1286, DOI: 10.1016/J.COMNET.2008.09.016 [retrieved on 2008-10-04]

## Description

### TECHNICAL FIELD

Embodiments of the present invention relate to the technical field of communications and, in particular, to a WTP access method, WTP management method, apparatus and system.

### BACKGROUND

With rapid development of wireless local network (WLAN) techniques, the techniques are widely used in family, enterprise, and public areas. A centralized WLAN architecture emerges in enterprise applications as the times require.

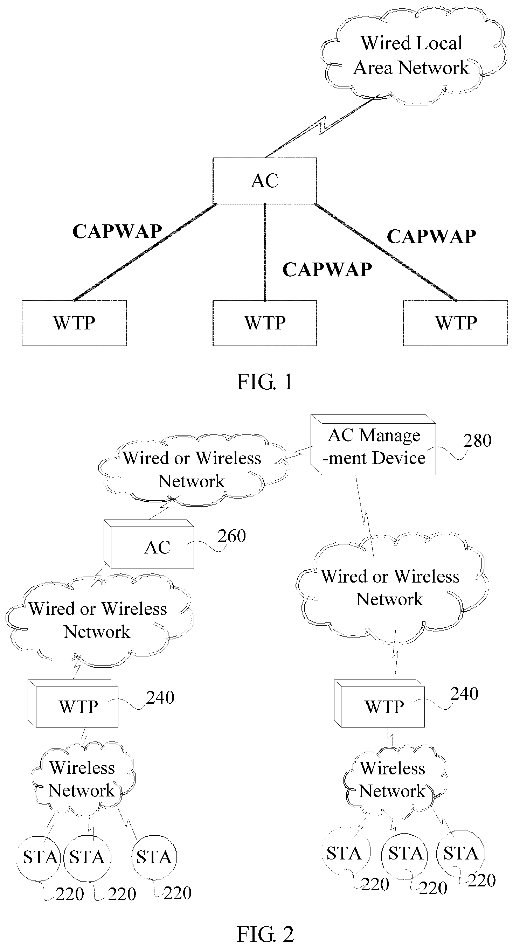

Please refer to FIG. 1, which shows a schematic structure diagram of a centralized WLAN architecture. This centralized WLAN architecture includes an access controller (AC) and a plurality of wireless termination points (WTP) managed by this AC. Control and provisioning of wireless access point protocol (CAPWAP) is used for the communication between the AC and the WTP. The WTP refers to the network node, such as an access point (AP) or a bring your own device (BYOD), which receives and transmits wireless network data; and the AC refers to a controller which is used for receiving and transmitting the wireless data transmitted from the WTP, performing corresponding processing to the wireless data, and then transmitting the processed wireless data to a wired local network, so as to achieve information exchanging between the wireless local network and the wired local network.

During the implementation of the present invention, the inventors founds at least the following problems existing in the prior art: in practical work or life, due to the widely use of BYOD such as a phone, a personal computer, a pad and the like, there are a lot of WTP exists randomly without control of an AC. When these randomly existing WTPs need to establish a connection with an AC, they need to know the prior information such as address of the AC and the like, and centain initialization condicitons, however it is difficult in the prior technology for the randomly existing WTPs to obtain the prior information and the initialization conditions related to the AC. Prior art document D1 (CALHOUN P ET AL: "CAPWAP Protocol Specification; draft-ietf-capwap-protocol-specification-06.txt") discloses CAMWAP Protocol Specification, which defines the Control and Provisioning of Wireless Access Points (CAPWAP) Protocol (see Abstract). D2 (BERNASCHI M ET AL: "Open CAPWAP: An open source CAPWAP implementation for the management and configuration of WiFi hot-spots") the design and the implement of Open CAPWAP (see paragraph 1. Introduction).

### SUMMARY

In order to solve the problem in the prior art that, it is difficult for a WTP to obtain the prior information and the initialization conditions related to an AC, embodiments of the present invention provides a WTP access method, WTP management method, apparatus and system. The invention is set out in the appended set of claims.

The technical solutions are as follows:
In a first aspect, a WTP access method is provided, which is applied to a wireless termination point, WTP, and the method includes:
establishing a connection with an AC management device via a unique network address, where the AC management device is an access control device which has a unique DNS domain name or a fixed IP address and is used for managing at least one access controller, AC;
reporting, geographic position of the WTP to the AC management device;
receiving the connection information of the at least one AC fed back by the AC management device, where management area of each of the at least one AC covers the geographic position of the WTP, and where the connection information includes at least one of a static address, a broadcast address, identification information and DNS information; and
establishing a connection with the at least one AC according to the connection information that has been found.

With reference to the first aspect, the first, the second or the third possible implementation of the first aspect, in a fourth possible implementation of the first aspect, where, if none connection information of any AC is obtained from the AC management device, or if the connection cannot be established with any AC after the connection information of the at least one AC is obtained, the method further includes:
sending, a requesting for management request to the AC management device; and
accepting management from the AC management device after a response message from the AC management device in response to the requesting for management request is received.

With reference to the first aspect, the first, the second or the third possible implementation of the first aspect, in a fifth possible implementation of the first aspect, where the establishing the connection with the AC management device via the unique network address, includes:
sending a connection request to the AC management device via the unique network address;
receiving a connection response fed back by the AC management device in response to the connection request; and
establishing the connection with the AC management device via an extended tunnel of control and provisioning of wireless access point protocol, CAPWAP, after the connection response is received.

A WTP access method is provided, which is applied to a wireless termination point, WTP, and the method includes:
establishing a connection with an access controller, AC, management device via a unique network address, wherein the AC management device is an access control device which has a unique DNS domain name or a fixed IP address and is used for managing at least one AC;
receiving the connection information and management area of the at least one AC fed back by the AC management device, wherein the connection information comprises at least one of a static address, a broadcast address, identification information and DNS information;
looking for, according to geographic position of the WTP and the management area of each of the at least one AC, at least one AC of which the management area covers the geographic position of the WTP in the at least one AC; and
establishing a connection with the at least one AC according to the connection information that has been found.

In a second aspect, a WTP management method is provided, which is applied to an AC management device, wherein the AC management device is an access control device which has a unique DNS domain name or a fixed IP address and is used for managing at least one AC, and the method includes:
establishing a connection with a wireless termination point, WTP, via a unique network address;
receiving geographic position of the WTP reported by the WTP;
looking for at least one AC of which management area covers the geographic position of the WTP; and
providing connection information of the at least one AC to the WTP, where the connection information includes at least one of a static address, a broadcast address, identification information and DNS information.

A WTP management method, is provided, which is applied to an AC management device, wherein the AC management device is an access control device which has a unique DNS domain name or a fixed IP address and is used for managing at least one AC, and the method includes:
establishing a connection with a WTP via a unique network address; and
providing connection information and management area of the at least one AC to the WTP, wherein the connection information comprises at least one of a static address, a broadcast address, identification information and DNS information.

With reference to the second aspect, the first or the second possible implementation of the second aspect, in a third possible implementation of the second aspect, the method, further includes:
receiving a requesting for management request sent by the WTP, where the request is a request which is sent to the AC management device by the WTP when none connection information of any AC is obtained from the AC management device, or when a connection cannot be established with any AC after the connection information of the at least one AC is obtained; and
sending a response message in response to the requesting for management request to the WTP after the requesting for management request is received, so that the WTP accepts management from the AC management device after receiving the response message from the AC management device in response to the requesting for management request.

With reference to the second aspect, the first or the second possible implementation of the second aspect, in a fourth possible implementation of the second aspect, where the establishing the connection with the wireless termination point, WTP, includes:
receiving a connection request sent by the WTP via the unique network address;
feeding back a connection response to the WTP after the connection request is received; and
establishing the connection with the WTP via an extended tunnel of control and provisioning of wireless access point protocol, CAPWAP, after the connection response is received by the WTP.

In a third aspect, a WTP access apparatus is provided, which is applied to a wireless termination point, WTP, and the apparatus includes:
a management device connection module, configured to establish a connection with an AC management device via a unique network address, where the AC management device is an access control device which has a unique DNS domain name or a fixed IP address and is used for managing at least one access controller, AC;
a connection information obtaining module including a position reporting unit and a connection information unit;
the position reporting unit is configured to report geographic position of the WTP to the AC management device connected to the management device connection module; and
the connection information receiving unit is configured to receive the connection information of the at least one AC fed back by the AC management device, where management area of each AC of the at least one AC covers the geographic position of the WTP, and where the connection information includes at least one of a static address, a broadcast address, identification information and DNS information; and
an AC connection module including a second connection unit;
where the second connection unit is configured to establish a connection with the at least one AC according to the connection information that has been found.

A WTP access apparatus is provided, which is applied to a WTP, and the apparatus includes:
a management device connection module, configured to establish a connection with an access controller, AC, management device via a unique network address, wherein the AC management device is an access control device which has a unique DNS domain name or a fixed IP address and is used for managing at least one AC;
a connection information obtaining module comprising a connection information receiving unit, wherein the connection information receiving unit is configured to receive the connection information and management area of the at least one AC fed back by the AC management device, wherein the connection information comprises at least one of a static address, a broadcast address, identification information and DNS information; and
an AC connection module comprising an AC query unit and a second connection unit, wherein the AC query unit is configured to look for, according to geographic position of the WTP and the management area of each of the at least one AC, at least one AC of which the management area covers the geographic position of the WTP in the at least one AC; and the second connection unit is configured to establish a connection with the at least one AC according to the connection information that has been found.

In a second possible implementation of the third aspect, where the connection information obtaining module includes: a connection information obtaining unit;
the connection information obtaining unit is configured to obtain the connection information and management area of the at least one AC from the AC management device, where the connection information includes at least one of a static address, a broadcast address, identification information and DNS information; and
where the at least one AC includes all ACs managed by the AC management device; or,
where the at least one AC includes n ACs managed by the AC management device, and where n is a preset threshold.

With reference to the second possible implementation of the third aspect, in a third possible implementation of the third aspect, where the AC connection module, includes: an AC query unit and a second connection unit;
the AC query unit is configured to look for, according to geographic position of the WTP and the management area of each of the at least one AC, at least one AC of which the management area covers the geographic position of the WTP in the at least one AC; and
the second connection unit is configured to establish the connection with the at least one AC according to the connection information that has been found.

With reference to the third aspect, the first, the second or the third possible implementation of the third aspect, in a fourth possible implementation of the third aspect, where, when none connection information of any AC is obtained from the AC management device, or when the connection cannot be established with any AC after the connection information of the at least one AC is obtained, the apparatus further includes: an request sending module and a management accepting module;
the request sending module is configured to send a requesting for management request to the AC management device; and
the management accepting module is configured to accept management from the AC management device after receiving a response message from the AC management device in response to the requesting for management request sent by the request sending module.

With reference to the third aspect, the first, the second or the third possible implementation of the third aspect, in a fifth possible implementation of the third aspect, where the management device connection module includes: a connection request unit, a first receiving unit and a first connection unit;
the connection request unit is configured to send a connection request to the AC management device via the unique network address;
the first receiving unit is configured to receive a connection response fed back by the AC management device in response to the connection request sent by the connection request unit; and
the first connection unit is configured to establish the connection with the AC management device via an extended tunnel of control and provisioning of wireless access point protocol, CAPWAP , after the connection response is received by the first receiving unit.

In a fourth aspect, a WTP management apparatus is provided, which is applied to an AC management device, and the apparatus includes:
a WTP connection module, configured to establish a connection with a wireless termination point, WTP, via a unique network address wherein the AC management device is an access control device which has a unique DNS domain name or a fixed IP address and is used for managing at least one AC,; and
a connection information providing module including a position receiving unit, an AC query unit, and a connection information sending unit; where the position receiving unit is configured to receive geographic position of the WTP reported by the WTP connected to the WTP connection module;
the AC query unit is configured to look for at least one AC of which management area covers the geographic position of the WTP; and
the connection information sending unit is configured to provide the connection information of the at least one AC to the WTP connected to the WTP connection module, where the connection information includes at least one of a static address, a broadcast address, identification information and DNS information.

In a first possible implementation of the fourth aspect, where the connection information providing module, further includes: a position receiving unit, an AC query unit, and a connection information sending unit;
the position receiving unit is configured to receive geographic position of the WTP reported by the WTP connected to the WTP connection module;
the AC query unit is configured to look for at least one AC of which management area covers the geographic position of the WTP; and
the connection information sending unit is configured to send the connection information of the at least one AC that has been found to the WTP, where the connection information includes at least one of a static address, a broadcast address, identification information and DNS information.

In a second possible implementation of the fourth aspect, where the connection information providing module, further includes a connection information providing unit:
the connection information providing unit is configured to provide the connection information and management area of the at least one AC to the WTP connected to the WTP connection module, where the connection information includes at least one of a static address, a broadcast address, identification information and DNS information; and
where the at least one AC includes all ACs managed by the AC management device; or,
where the at least one AC includes n ACs managed by the AC management device, and where n is a preset threshold.

With reference to the fourth aspect, the first or the second possible implementation of the fourth aspect, in a third possible implementation of the fourth aspect, the apparatus further includes: a request receiving module and a feedback sending module;
the request receiving module is configured to receive a requesting for management request sent by the WTP, where the request is a request which is sent to the AC management device by the WTP when none connection information of any AC is obtained from the AC management device, or when the connection cannot be established with any AC after the connection information of the at least one AC is obtained; and
the feedback sending module is configured to send a response message to the WTP in response to the requesting for management request after the requesting for management request is received, so that the WTP accepts management from the AC management device after receiving the response message from the AC management device in response to the requesting for management request.

With reference to the fourth aspect, the first or the second possible implementation of the fourth aspect, in a fourth possible implementation of the fourth aspect, where the WTP connection module includes: a connection receiving unit, a response feeding back unit and a WTP connection unit;
the connection receiving unit is configured to receive a connection request sent by the WTP via the unique network address;
the response feeding back unit is configured to feed back a connection response to the WTP after the connection request is received by the connection receiving unit; and
the WTP connection unit is configured to establish the connection with the WTP via an extended tunnel of control and provisioning of wireless access point protocol, CAPWAP, after the WTP receives the connection response which is fed back by the response feeding back unit.

A WTP management apparatus is provided, which is applied to an AC management device, wherein the AC management device is an access control device which has a unique DNS domain name or a fixed IP address and is used for managing at least one AC, and the apparatus includes:
a WTP connection module, configured to establish a connection with a WTP via a unique network address; and
a connection information providing module comprising a connection information providing unit, wherein the connection information providing unit is configured to provide the connection information and management area of the at least one AC to the WTP connected to the WTP connection module, wherein the connection information comprises at least one of a static address, a broadcast address, identification information and DNS information.

In a seventh aspect, a WTP accesss system is provided by the present invention, including: at least one WTP, an AC management device and at least one AC, where the AC management device is an access control device which has a unique DNS domain name or a fixed IP address and is used for managing the at least one AC;
the WTP includes a WTP accesss apparatus according to any one of the third aspect and any possible implementation of the third aspect; and the AC management device includes a WTP management apparatus according to any one of the fourth aspect and any possible implementation of the fourth aspect.

In a eighth aspect, a WTP accesss system is provided by the present invention, including: at least one WTP, an AC management device and at least one AC, where the AC management device is an access control device which has a unique DNS domain name or a fixed IP address and is used for managing the at least one AC;
the WTP is a WTP according to any one of the fifth aspect and any possible implementation of the fifth aspect; and
the AC management device is an AC management device according to any one of the sixth aspect and any possible implementation of the sixth aspect.

The technical effects of the technical solutions provided in the embodiments of the present invention are:
a connection with an AC management device is established via a unique network address, where the AC management device is used for managing at least one access controller AC; connection information of the at least one AC is obtained from the AC management device; and a connection with the at least one AC is established according to the obtained connection information; thus, the problem in the prior art that it is difficult for the WTP to obtain the prior information and the initialization conditions related to the AC is solved, and the effects that the WTP can discover an AC and establish a connection with the AC via an AC management device are achieved.

### BRIEF DESCRIPTION OF DRAWINGS

To describe the technical solutions in embodiments of the present invention more clearly, the following briefly introduces the accompanying drawings needed for describing the embodiments. Apparently, the accompanying drawings in the following description illustrate merely some embodiments of the present invention, and persons of ordinary skill in the art may still derive other drawings from these accompanying drawings without creative effort.
FIG. 1 is a schematic structure diagram of a centralized WLAN architecture;
FIG. 2 is a schematic diagram of an implementation environment involved in a WTP access method and a WTP management method according to embodiments of the present invention;
FIG. 3 is a schematic flow chart of a WTP access method according to an embodiment of the present invention;
FIG. 4 is a schematic flow chart of a WTP management method according to an embodiment of the present invention;
FIG. 5A is a schematic flow chart of a WTP access method according to another embodiment of the present invention;
FIG. 5B is a schematic flow chart of a method for a WTP establishing a connection with an AC management device via a unique network address according to another embodiment of the present invention;
FIG. 5C is a schematic status chart according to another embodiment of the present invention;
FIG. 6 is a schematic flow chart of a WTP access method according to another embodiment of the present invention;
FIG. 7 is a schematic diagram of a WTP access apparatus according to an embodiment of the present invention;
FIG. 8 is a schematic diagram of a WTP management apparatus according to an embodiment of the present invention;
FIG. 9 is a schematic diagram of a WTP access system according to an embodiment of the present invention;
FIG. 10 is a schematic diagram of a WTP access system according to another embodiment of the present invention;
FIG. 11 is a schematic diagram of a WTP according to an embodiment of the present invention;
FIG. 12 is a schematic diagram of a WTP according to another embodiment of the present invention;
FIG. 13 is a schematic diagram of an AC management device according to an embodiment of the present invention; and
FIG. 14 is a schematic diagram of an AC management device according to another embodiment of the present invention.

### DESCRIPTION OF EMBODIMENTS

To make the objectives, technical solutions, and advantages of embodiments of the present invention clearer, the following describes embodiments of the present invention more elaborately, with reference to the accompanying drawings.

Please refer to FIG. 2, which shows a schematic diagram of an implementation environment involved in a WTP access method and a WTP management method according to embodiments of the present invention. The implementation environment may be a wireless local network WLAN, and this WLAN includes at least one station (STA) 220, at least one WTP 240, at least one AC 260 and at least one AC management device 280.

STA 220, may be a personal electrical device such as a laptop, a pad or a smart phone.

Each STA 220 may be connected to a WTP 240 via wireless network.

WTP 240 is a wireless network access point, which can establish a wireless network, called base station subsystem (BSS); STA 220 may access this BSS through a way of relating; and WTP 240 is an edge network device of this BSS, where other devices in this BSS may communicate with devices in other wired network, or in other wireless network through WTP 240. WTP 240, may be a WTP which is controlled by AC 260 through the wired or wireless network, or is not controlled by AC 260.

If WTP 240 is controlled by AC 260, WTP 240 may receive network data from AC 260, and may also report network data to AC 260, where the network data includes network data which is sent by WTP 240 to STA 220 or received by WTP 240 from STA 220, and may also includes network data which is sent by AC 260 to WTP 240 or received by AC 260 from WTP 240. Each WTP 240 may connect to a AC 260 through wired or wireless network.

AC 260, is a controller which may be used for managing WTP 240. If WTP 240 is managed by AC 260, WTP 240 may upload channel monitoring information and receive management information of WTP 240.

AC management device 280 is a newly added device in embodiments of the present invention, and is an access control device which has a unique DNS domain name or a fixed IP address, may be used for managing AC 260, and may also be used for managing WTP 240. AC management device 280 may connect to WTP 240 and/or AC 260 via a wired or wireless network. If WTP 240 is managed by AC management device 280, WTP 240 may upload channel monitoring information and receive management information of WTP 240.

AC management device 280 may locate at any position in the network, as long as it has a unique DNS domain name or a prefixed IP address, and WTP 240 can find the AC management device. AC management device 280 may be integrated into network devices other than AC 260, as long as WTP 240 can discover and establish a connection with AC management device 280, and the AC management device can connect to ACs. IN most embodiments, AC management device 280 is generally set as an independent device, to specifically manage AC 260 or WTP 240.

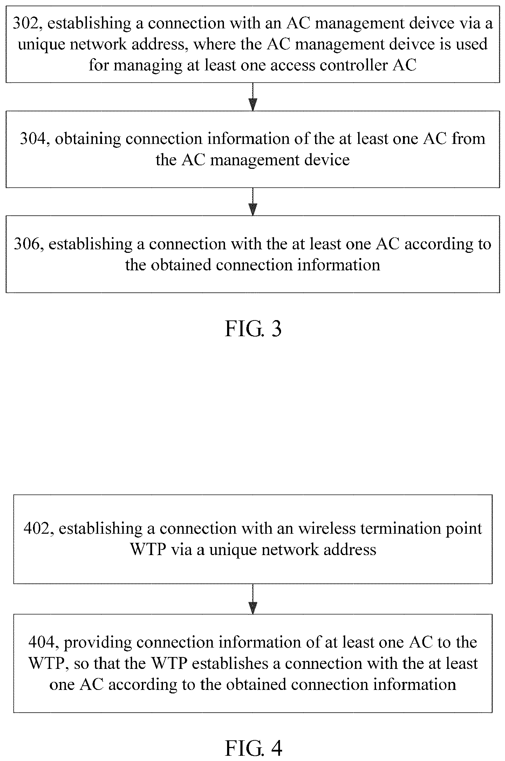

Please refer to FIG. 3, which shows a schematic flow chart of a WTP access method according to an embodiment of the present invention. The present embodiment is mainly described by taking the WTP access method applied to the WTP not controlled by the AC shown in FIG. 2 as an example. The WTP access method includes:
Step 302, establishing a connection with an AC management deivce via a unique network address, where the AC management deivce is used for managing at least one access controller AC;
Step 304, obtaining connection information of the at least one AC from the AC management device; and
Step 306, establishing a connection with the at least one AC according to the obtained connection information.

In view of above, in the WTP access method provided in the embodiment of the present invention, a connection with an AC management deivce is established via a unique network address, where the AC management deivce is used for managing at least one access controller AC; connection information of the at least one AC is obtained from the AC management device; and a connection with the at least one AC is established according to the obtained connection information; thus, the problem in the prior art that it is difficult for the WTP to obtain the prior information and the initialization conditions related to the AC is solved, and the effects that the WTP can discover an AC and establish a connection with the AC via an AC management device are achieved.

Please refer to FIG. 4, which shows a schematic flow chart of a WTP management method according to an embodiment of the present invention. The present embodiment is mainly described by taking the WTP management method applied to the AC management device shown in FIG. 2 as an example. The WTP management method includes:
Step 402, establishing a connection with a wireless termination point WTP via a unique network address; and
Step 404, providing connection information of at least one AC to the WTP, so that the WTP establishes a connection with the at least one AC according to the obtained connection information.

In view of above, in the WTP management method provided in the embodiment of the present invention, a connection with the WTP is established via a unique network address, where the AC management device is used for managing at least one access controller AC; and the AC management device provides the connection information of at least one AC to the WTP, so that the WTP establishes a connection with the at least one AC according to the obtained connection information; the problem in the prior art that it is difficult for the WTP to obtain the prior information and the initialization conditions related to the AC is solved, and the effects that the WTP can discover an AC and establish a connection with the AC via an AC management device are achieved.

The WTP may obtain the connection information of the AC from the AC management device to help the WTP discover and establish connection with the AC in two ways: 1, the WTP obtains the connection information of the at least one AC from the AC management device; 2, the WTP obtains the connection information and management area of the at least one AC from the AC management device. In the following, two different embodiments are used for describing the two ways in detail, respectively.

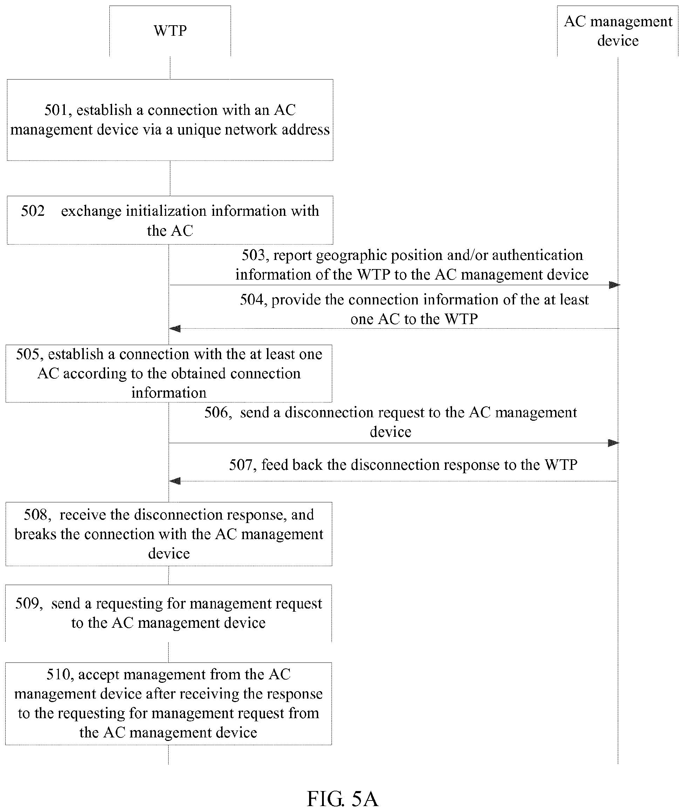

Please refer to FIG. 5A, which shows a schematic flow chart of a WTP access method according to another embodiment of the present invention. The present embodiment is mainly described by taking the WTP access method applied to the implementation environment shown in FIG. 2 as an example, where the WTP obtains the connection information of the at leat one AC from the AC management device. The WTP access method includes:
Step 501, a WTP establishes a connection with an AC management device via a unique network address;

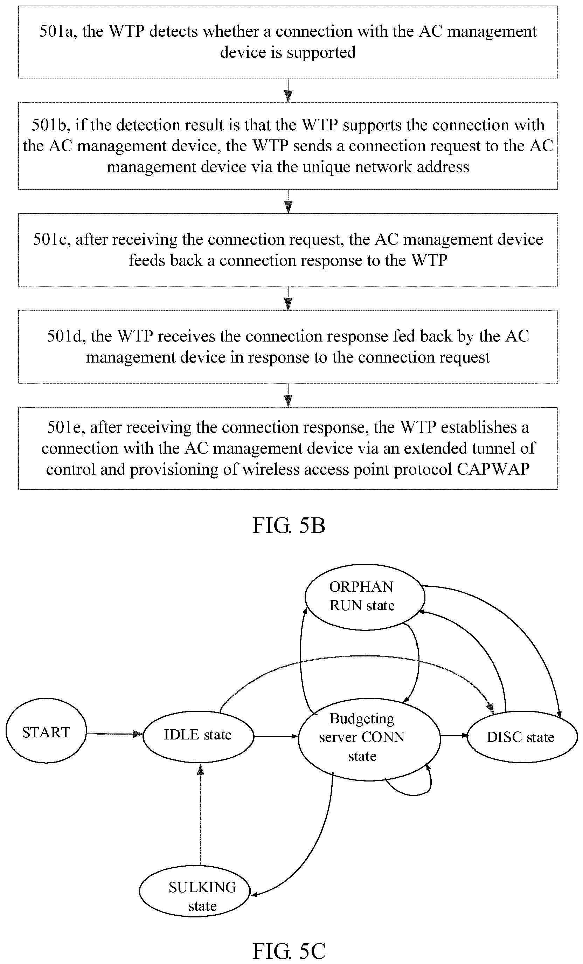

The AC management device is used for managing the at least one AC, the WTP establishes the connection with the AC management device via the unique network address, which may also be thought as that the AC management device establishes the connection with the WTP via the unique network address, where the connection may be a CAPWAP extended tunnel connection which is extended based on the CAPWAP protocol. Specifically, the step may include but is not limitted to the following substeps, as shown in FiG. 5B:
501a, the WTP detects whether a connection with the AC management device is supported;

The WTP first starts, and enters IDLE state, as shown in FIG. 5C. In the IDLE state, the WTP detects whether a connection with the AC management device is supported. That is, the WTP detects whether itself meets the conditions to connect with the AC management device and whether this function is supported, where the conditions includes one or more kinds of configuration information, searching capability and the like.

501b, if the detection result is that the WTP supports the connection with the AC management device, the WTP sends a connection request to the AC management device via the unique network address;
The unique network address refers to the address which enable the WTP to find the AC management device, and may include but not be limited to one or more of the preset unique DNS domain name or IP address. Preferably, the WTP further carries authentication information in the connection request. If the detection result is that the WTP supports the connection with the AC management device, the WTP enters ACS CONN (AC management device connected) state from the IDLE state, and sends the connection request to the AC management device via the unique network address.

Correspondingly, the AC management device receives the connection request sent by the WTP via the unique network address. Preferably, after receiving the connection request sent by the WTP, the AC management device needs to perform authentication to the authentication information carried in the connection request from the WTP.
501c, after receiving the connection request, the AC management device feeds back a connection response to the WTP;

After receiving the connection request sent by the WTP, the AC management device feeds back the connection response to the WTP. Preferably, the AC management device needs to perform authentication to the authentication information carried in the connection request of the WTP, and when the authentication information can pass the authentication of the AC management device, the AC management device sends the connection response to the WTP, and an anthentication result is carried in the connection response.

501d, the WTP receives the connection response fed back by the AC management device in response to the connection request;
If the WTP does not receive the connection response from the AC management device, the WTP continues sending the connection request to the AC management device at a regular preset time interval, until receiving the connection response from the AC management device.

However, if the WTP still does not receive a connection response from the AC management device after the number of times that the WTP retransmits the connection request to the AC management device reaches a maximum retransmission times, then the WTP stops transmitting the connection request, and enters a SULKING state from the ACS CONN state. The maximum retransmission times is a preset threshold.

After the WTP stops sending the connection request, and after a timeout waiting for retransmission, the WTP reenters the ACS CONN state from the SULKING state, and then continues sending the connection request to the AC management device. The timeout waiting for retransmission is a preset threshold.

501e, after receiving the connection response, the WTP establishes a connection with the AC management device via an extended tunnel of control and provisioning of wireless access point protocol CAPWAP;
After receiving the connection response, the WTP establishes a connection with the AC management device via an extended tunnel of control and provisioning of wireless access point protocol CAPWAP. In other words, after the WTP receives the connection response, the AC management device establishes an extended tunnel connection extended tunnelof control and provisioning of wireless access point protocol CAPWAP with the WTP.

Step 502, the WTP exchanges initialization information with the AC;
After establishing the connection with the AC management device via the CAPWAP extended tunnel, the WTP can exchange information with the AC management device. Specifically, this step includes but is not limited to the following substeps:
1, the WTP reports information such as configuration status to the AC management device;
   For example, the information such as configuration status includes information such as a wireless channel which the WTP belongs to.
   Correspondingly, the AC management device receives the information such as configuration status reported by the WTP, and generates a configuration status response.
2, the AC management device feeds back the configuration status response to the WTP;
   Correspondingly, the WTP receives the configuration status response fed back by the AC management device;
   If the positon of the WTP changes, or the channel which the WTP belongs to changes, the WTP needs to report the changed configuration status to the AC management device, so that the AC management device receives the changed configuration status of the WTP, generates a response according to this configuration status, and feeds back the response to the WTP, thereby achieving timely update of the WTP information on the AC management device.

Step 503, the WTP reports geographic position and/or authentication information of the WTP to the AC management device;
Due to that the WTP needs to discover the connectable ACs around, and the WTP needs to find the ACs around the WTP through the AC management device, the WTP needs to report its own geographic position to the AC management device. The geographic position may be a physical address of the WTP, and the physical address may be represented by coordinates of the earth or by latitude and longitude. The authentication information may be used to indicate which network provider that the WTP belongs to.

Correspondingly, the AC management device receives the geographic position and/or the authentication information of the WTP reported by the WTP.

Step 504, the AC management device provides the connection information of the at least one AC to the WTP.

In this step, there may be three implementations for the AC management device to provide the connection information of the AC to the WTP: firstly, the AC management device may provide the connection information of the AC to the WTP according to the geographic position of the WTP; secondly, the AC management device may also provide the connection information of the AC to the WTP according to the authentication information of the WTP; thirdly, the AC management device may provide the connection information of the AC to the WTP according to the combination of the geographic position and the authentication information of the WTP;

Specifically, for the first one, the AC management device provides the connection information of the at least one AC to the WTP according to the geographic position of the WTP, the management area of each of the at least one AC covers the geographic position of the WTP, and the connection information includes at least one of a static address, a broadcast address, identification information and DNS information. Specifically, this step includes but is not limited to the following substeps:
1, the AC management device looks for at least one AC of which the management area covers the geographic position of the WTP in at least one AC;
2, the AC management device transmits the connection information of the at least one AC that has been found to the WTP; and
   Correspondingly, the WTP obtains the connection information of the at least one AC from the AC management device, i.e., the WTP receives the connection information of the at least one AC fed back by the AC management device, the management area of each of the at least one AC covers the geographic position of the WTP, and the connection information includes at least one of the static address, the broadcast address, the identification information and the DNS information.

For the second one, the AC management device provides the connection information of the at least one AC to the WTP according to information of a network provider in the authentication information of the WTP, and the at least one AC carries the connection information of the at least one AC of which the information of the network provider is consistent with that indicated by the authentication information of the WTP. Specifically, this step includes but is not limited to the following substeps:
1, the AC management device looks for the AC of which the information of the network provider is consistent with that indicated by the authentication information of the WTP;
   For example, the information of the network provider indicated by the authentication information of one WTP is AA, and if information of the network provider of an AC is AA, then the information of the network provider of the AC is consistent with that of the WTP; and if information of the network provider of another AC is DD, then the information of the network provider of the AC is not consistent with that of the WTP.
2, the AC management device sends the connection information of the at least one AC that has been found to the WTP;
   For the third one, the AC management device provides the connection information of the at least one AC to the WTP according to the combination of the geographic position and the authentication information of the WTP;

The AC corresponding to the provided connection information of the at least one AC, has the management area covering the geographic position of the WTP, and has the information of the network provider which is consistent with that indicated by the authentication information of the WTP. Specifically, this step includes but is not limited to the following substeps:
1, the AC management device looks for at least one AC of which the management area covers geographic position of the WTP in at least one AC, and then looks for an AC of which the information of the network provider is consistent with that indicated by the authentication information of the WTP in the at least one AC that has been found; or, firstly looks for ACs of which the information of the network provider is consistent with that indicated by the authentication information of the WTP, and then looks for least one AC of which the management area covers geographic position of the WTP in the ACs that have been found;
2, the AC management device sends the connection information of the at least one AC that has been found to the WTP;
   The implementation of the third one would not be discussed in detail herein, which may refers to the first one and the second one for details.

Step 505, the WTP establishes a connection with the at least one AC according to the obtained connection information.

After obtaining the connection information of the AC, the WTP enters a DISC (discovery) state from the ACS CONN state. The WTP establishes a connection with the at least one AC according to the connection information of the AC, and accepts management from the AC. Generally, the WTP establishes the connection with one AC.

Specifically, according to different connection information, this step may includes any of the four ways in the following:
For the first one, if the connection information is the static address, the WTP discovers the AC and establishes connection with the AC according to its static address;
For the second one, if the connection information is the broadcast address, the WTP in the same broadcast domain with the AC, and the WTP discovers the AC and establishes connection with the AC;
For the third one, if the connection information is the identification information, the WTP looks for the address of the AC through dynamic host configuration protocol (DHCP) option 43 and the identification information, and establishes the connection with the AC; and
For the fourth one, if the connection information is the DNS information, the WTP discovers the AC through specifying the DNS address of the AC and establishes the connection with the AC.

Step 506, the WTP sends a disconnection request to the AC management device;
After establishing a connection with an AC successfully, the WTP sends the disconnection request to the AC management device.

Correspondingly, the AC management device receives the disconnection request from the WTP, and generates a disconnection response according to the disconnection request.

Step 507, the AC management device feeds back the disconnection response to the WTP;
Step 508, the WTP receives the disconnection response, and breaks the connection with the AC management device;

For supplementary specification, if the WTP cannot establish a connection with an AC successfully, it may also accept management from the AC management device. Specifically, if the WTP cannot obtain connection information of any AC from the AC management device, or the WTP cannot establish a connection with any AC after obtaining the connection information of at least one AC, the following step 509 and step 510 are performed:
Where, any one of the following two circumstances is included:
For the first one, in step 504, the WTP does not obtain connection information of any AC from the AC management device; or,
For the second one, in step 505, after the connection information of the at least one AC is obtained, the WTP cannot establish a connection with any AC.

Step 509, the WTP sends a requesting for management request to the AC management device;
When any one of the two above mentioned circumstances occurs, the WTP enters ORPHAN RUN state from the ACS CONN state or from the DISC state, and then sends the requesting for management request to the AC management device.

Correspondingly, the AC management device receives the requesting for management request from the WTP; after receiving the requesting for management request from the WTP, the AC management device sends a response to the requesting for management request, so that the WTP accepts management from the AC management device after receiving the response to the requesting for management request from the AC management device; and
Step 510, the WTP accepts management from the AC management device after receiving the response to the requesting for management request from the AC management device;
The step 509 and step 510 may be executed after step 504, and may also be executed after step 505.

When the WTP does not obtain the connection information of any AC from the AC management device, the step 509 and step 510 are executed after step 504; and
When the WTP cannot establish a connection with any AC after obtaining the connection information of the at least one AC, the step 509 and step 510 are executed after step 505.

The management to the WTP from the AC management device are analogous to that to the WTP from the AC, which includes but is not limited to the following content:
First, the AC management device complete configuration update/reset for the WTP through configuration update/reset command;
Second, the AC management device exchanges heartbeats information with the WTP periodically, so that the AC management device can manage the WTP much better. The heartbeats information refers to information indicating whether the WTP is online. If the AC management device does not receive the heartbeats information from the WTP, i.e., the WTP is not online, then the AC management device deletes the WTP, thus the objective of saving resources is achieved. The period may be a preset time threshold.
Third, the WTP reports its geographic position and statistical information to the AC management device periodically, so that the AC management device looks for the AC which meets the conditions and is around the WTP according to the geographic position and statistical information of the WTP, and sends the connection information of the AC to the WTP; after receiving the connection information of the AC, the WTP transfers to the DISC state, and starts steps of discovering the AC. The period may be a preset time threshold.
Fourth, the WTP may also try to establish the connection with the AC periodically;
Fifth, the AC management device may control a certain one or a plurality of STA through the WTP;
   As one WTP may manage a plurality of STAs, and in the plurality of STA, some or one STA may occupy resources seriously, or, some or one STA does not work. The WTP may control access of the STA, through channel monitoring, interference scheduling, and/or workload balancing, and as the AC management device controls the WTP, the AC management device may also control the STA indirectly, then the AC management device may adjust some or one STA which occupies resources seriously to the WTP which has fewer connection, or, the AC management device may break the connection between the WTP and some or one STA which does not work.

In view of above, in the WTP access method provided in the embodiment of the present invention, a connection with an AC management deivce is established via a unique network address, where the AC management deivce is used for managing at least one access controller AC; connection information of the at least one AC is obtained from the AC management device; and a connection with the at least one AC is established according to the obtained connection information; thus, the problem in the prior art that it is difficult for the WTP to obtain the prior information and the initialization conditions related to the AC is solved, and the effects that the WTP can discover an AC and establish a connection with the AC via an AC management device are achieved.

In addition, through step 509 and step 510, the effects that the WTP may accept management from the AC management device even when the WTP cannot establish a connection with any AC can be achieved.

Moreover, through step 503 and step 504, the AC management device may look for information of an AC locating at the position of the WTP according to the geographic position of the WTP, may also look for an AC of which information of the network provider is consistent with that indicated by the authentication information of the WTP, and may also look for an AC according to the combination of the geographic position and the authentication information of the WTP, which enables the AC management device to provides more precise connection information of the AC to the WTP, thereby reducing transmission of unnecessary information, and achieving effects of saving network resources. As the WTP receives more precise connection information of the AC, the number of times of sending a connection request to the AC is reduced, and consumption of network resources is reduced.

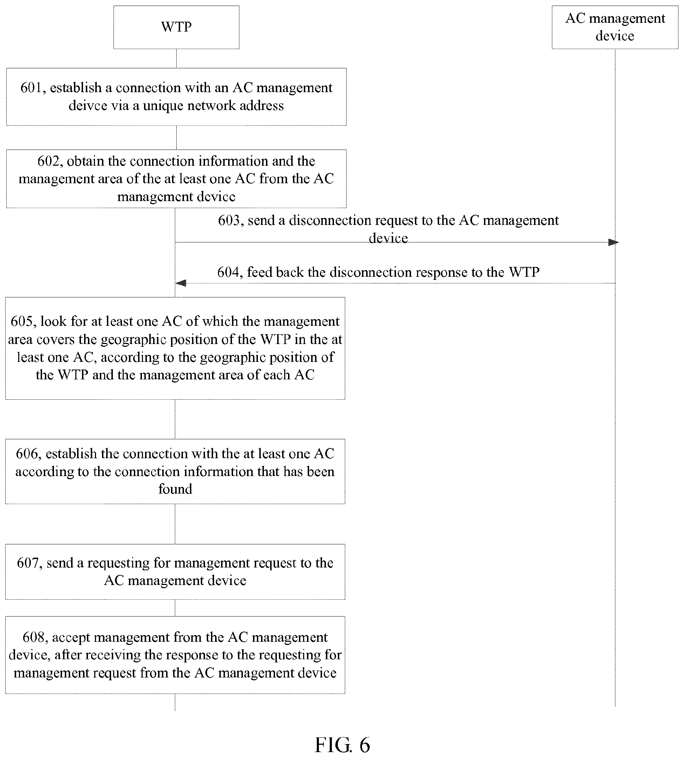

Please refer to FIG. 6, which shows a schematic flow chart of a WTP access method according to another embodiment of the present invention. The present embodiment is mainly described by taking the WTP access method applied to the implementation environment shown in FIG. 2 as an example, where the WTP obtains the connection information and the management area of the at least one AC. The WTP access method, includes:
Step 601, a WTP establishes a connection with an AC management deivce via a unique network address;
Where, the AC management deivce is used for managing at least one AC, the WTP establishes the connection with the AC management deivce via the unique network address, which may also be thought as that the AC management device establishes the connection with the WTP via the unique network address, where the connection may be a CAPWAP extended tunnel which is extended based on the CAPWAP protocol. Specifically, the step may include but is not limited to the following substeps:
1, the WTP detects whether a connection with the AC management device is supported;
   The WTP first starts, and enters IDLE state, as shown in FIG. 5C. In the IDLE state, the WTP detects whether a connection with the AC management device is supported. That is, the WTP detects whether itself meets the conditions to connect with the AC management device and whether this function is supported, where the conditions includes one or more kinds of configuration information, searching capability and the like.
2, if the detection result is that the WTP supports the connection with the AC management device, the WTP sends a connection request to the AC management device via the unique network address;
   The unique network address refers to the address which enable the WTP to find the AC management device, and may include but not be limited to one or more of the preset unique DNS domain name or IP address. Preferably, the WTP further carries authentication information in the connection request. If the detection result is that the WTP supports the connection with the AC management device, the WTP enters ACS CONN (AC management device connected) state from the IDLE state, and sends the connection request to the AC management device via the unique network address.
   Correspondingly, the AC management device receives the connection request sent by the WTP via the unique network address. Preferably, after receiving the connection request sent by the WTP, the AC management device needs to perform authentication to the authentication information carried in the connection request from the WTP.
3, after receiving the connection request, the AC management device feeds back a connection response to the WTP;
   After receiving the connection request sent by the WTP, the AC management device feeds back the connection response to the WTP. Preferably, the AC management device needs to perform authentication to the authentication information carried in the connection request of the WTP, and when the authentication information can pass the authentication of the AC management device, the AC management device sends the connection response to the WTP, and an anthentication result is carried in the connection response.
4, the WTP receives the connection response fed back by the AC management device in response to the connection request;
   If the WTP does not receive the connection response from the AC management device, the WTP continues sending the connection request to the AC management device at a regular preset time interval, until receiving the connection response from the AC management device.
   However, the WTP still does not receive a connection response from the AC management device after the number of times that the WTP retransmits the connection request to the AC management device reaches a maximum retransmission times, then the WTP stops transmitting the connection request, and enters a SULKING state from the ACS CONN state. The maximum retransmission times is a preset threshold.
   After the WTP stops sending the connection request, and after a timeout waiting for retransmission, the WTP reenters the ACS CONN state from the SULKING state, and then continues sending the connection request to the AC management device. The timeout waiting for retransmission is a preset threshold.
5, after receiving the connection response, the WTP establishes a connection with the AC management device via an extended tunnel of control and provisioning of wireless access point protocol CAPWAP;
   After receiving the connection response, the WTP establishes a connection with the AC management device via an extended tunnel of control and provisioning of wireless access point protocol CAPWAP. In other words, after the WTP receives the connection response, the AC management device establishes an extended tunnel connection extended tunnelof control and provisioning of wireless access point protocol CAPWAP with the WTP.

Step 602, the WTP obtains the connection information and the management area of the at least one AC from the AC management device;
The WTP obtains the connection information and management area of the at least one AC from the AC management device, where the connection information includes at least one of a static address, a broadcast address, identification information and DNS information; and where the at least one AC includes all ACs managed by the AC management device; or, where the at least one AC includes n ACs managed by the AC management device, and where n is a preset threshold.

Step 603, the WTP sends a disconnection request to the AC management device;
Correspondingly, the AC management device receives the disconnection request from the WTP, and generates a disconnection response according to the disconnection request;
Step 604, the AC management device feeds back the disconnection response to the WTP;
Correspondingly, the WTP receives the disconnection response, and breaks the connection with the AC management device;
Step 605, the WTP looks for at least one AC of which the management area covers the geographic position of the WTP in the at least one AC, according to the geographic position of the WTP and the management area of each AC;
The WTP may look for, according to the geographic position of the WTP and the management area of each AC, the connection information of the at least one AC of which the management area covers the geographic position of the WTP in connection information of the obtained at least one AC, at a regular preset time interval, or when the physical address of the WTP is changed.

The geographic position may be a physical address of the WTP, and the physical address may be represented by coordinates of the earth or by latitude and longitude.

Step 606, The WTP establishes the connection with the at least one AC according to the connection information that has been found.

After finding the connection information of the AC, the WTP enters a DISC (discovery) state from the ACS CONN state. Specifically, according to different connection information, this step may includes any of the four ways in the following:
For the first one, if the connection information is the static address, the WTP discovers the AC and establishes connection with the AC according to its static address;
For the second one, if the connection information is the broadcast address, the WTP in the same broadcast domain with the AC, and the WTP discovers the AC and establishes connection with the AC;
For the third one, if the connection information is the identification information, the WTP looks for the address of the AC through DHCP (dynamic host configuration protocol) option 43 and the identification information, and establishes the connection with the AC; and
For the fourth one, if the connection information is the DNS information, the WTP discovers the AC through specifying the DNS address of the AC and establishes the connection with the AC.

For supplementary specification, if the WTP can not establish a connection with an AC successfully, it may also accept management from the AC management device. Specifically, when any one of the following three circumstances occurs, step 607 and step 608 needs to be executed:
Where, any one of the following three circumstances is included:
For the first one, in step 602, the WTP does not obtain connection information of any AC from the AC management device; or,
For the second one, in step 605, the WTP does not find the at least one AC of which the management area covers the geographic position of the WTP in the at least one AC; or
For the third one, in step 606, the WTP can not establish a connection with any AC successfully according to the connection information of the at least one AC that has been found;
Step 607, the WTP sends a requesting for management request to the AC management device;
When any one of the three above mentioned circumstances occurs, the WTP enters ORPHAN RUN state from the ACS CONN state or from the DISC state, and then sends the requesting for management request to the AC management device.

Correspondingly, the AC management device receives the requesting for management request from the WTP; after receiving the requesting for management request from the WTP, the AC management device sends a response to the requesting for management request, so that the WTP accepts management from the AC management device after receiving the response to the requesting for management request from the AC management device in response; and
Step 608, the WTP accepts management from the AC management device, after receiving the response to the requesting for management request from the AC management device;
Although the WTP has broken the connection with the AC management device after step 603, since a connection has been established by the WTP with the AC management device, when the WTP cannot establish the connection with the AC, it may resend the connection request to the AC management device and establishes a connection, i.e., step 601 is reexecuted.

The step 607 and step 608 may be executed after step 602, may also be executed after step 605, and may also be executed after step 606.

When the WTP does not obtain the connection information of any AC from the AC management device, the step 607 and step 608 are executed after step 602;
When the WTP does not find the at least one AC of which the management area covers the geographic position of the WTP in the at least one AC, the step 607 and step 608 are executed after step 605; and
When the WTP cannot establish a connection with any AC successfully according to the connection information of the at least one AC that has been found, the step 607 and step 608 are executed after step 606;
The management from the AC management device to the WTP is analogous to that from the AC to the WTP. Please refer to the detailed description in the above embodiment.

In view of above, in the WTP access method provided in the embodiment of the present invention, a connection with an AC management deivce is established via a unique network address, where the AC management deivce is used for managing at least one access controller AC; connection information and management area of the AC is obtained from the AC management device, where the connection information includes at least one of a static address, a broadcast address, identification information and DNS information; and a connection with the at least one AC is established according to the obtained connection information; thus, the problem in the prior art that it is difficult for the WTP to obtain the prior information and the initialization conditions related to the AC is solved, and the effects that the WTP can discover an AC and establish a connection with the AC via an AC management device are achieved.

In addition, through step 607 and step 608, the effects that the WTP may accept management from the AC management device even when the WTP cannot establish a connection with any AC can be achieved.

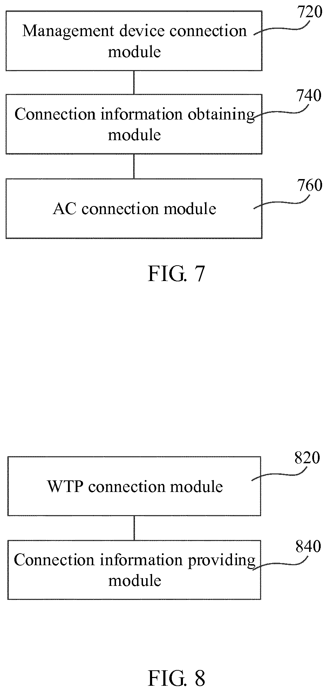

Please refer to FIG. 7, which shows a schematic structure diagram of a WTP access apparatus according to an embodiment of the present invention. The WTP access apparatus may be implemented as a whole or part of a wireless termination point WTP by software, hardware, or a combination thereof. The WTP access apparatus includes: a management device connection module 720, a connection information obtaining module 740 and an AC connection module 760;
The management device connection module 720 is configured to establish a connection with an AC management deivce via a unique network address, wherein the AC management deivce is used for managing at least one access controller AC;
The connection information obtaining module 740 is configured to obtain connection information of the at least one AC from the AC management device after the connection with the AC management device has been established by the WTP via the management device connection module 720; and
The AC connection module 760 is configured to establish a connection with the at least one AC according to the connection information obtained by the connection information obtaining module 740.

In view of above, in the WTP access apparatus provided in the embodiment of the present invention, a connection with an AC management deivce is established via a unique network address, where the AC management deivce is used for managing at least one access controller AC; connection information of the at least one AC is obtained from the AC management device; and a connection with the at least one AC is established according to the obtained connection information; thus, the problem in the prior art that it is difficult for the WTP to obtain the prior information and the initialization conditions related to the AC is solved, and the effects that the WTP can discover an AC and establish a connection with the AC via an AC management device are achieved.

Please refer to FIG. 8, which shows a schematic structure diagram of a WTP management apparatus according to an embodiment of the present invention. The WTP management apparatus may be implemented as whole or part of an AC management device which manages at least one AC, by software, hardware, or a combination thereof. The WTP management apparatus includes: a WTP connection module 820, and a connection information providing module 840;
The WTP connection module 820 is configured to establish a connection with a wireless termination point WTP via a unique network address; and
The connection information providing module 840 is configured to provide connection information of at least one AC to the WTP via the WTP connection module 820, so that the WTP establishes a connection with the at least one AC according to the obtained connection information.

In view of above, in the WTP management apparatus provided in the embodiment of the present invention, a connection with the AC management device is established via a unique network address, where the AC management device is used for managing at least one access controller AC; and the AC management device provides the connection information of at least one AC to the WTP, so that the WTP establishes a connection with the at least one AC according to the obtained connection information; the problem in the prior art that it is difficult for the WTP to obtain the prior information and the initialization conditions related to the AC is solved, and the effects that the WTP can discover an AC and establish a connection with the AC via an AC management device are achieved.

The WTP may obtain the connection information of the AC from the AC management device to help the WTP discover and establish connection with the AC in two ways: 1, the WTP obtains the connection information of the at least one AC from the AC management device; 2, the WTP obtains the connection information and management area of the at least one AC from the AC management device. In the following, two different embodiments are used for describing the two ways in detail, respectively.

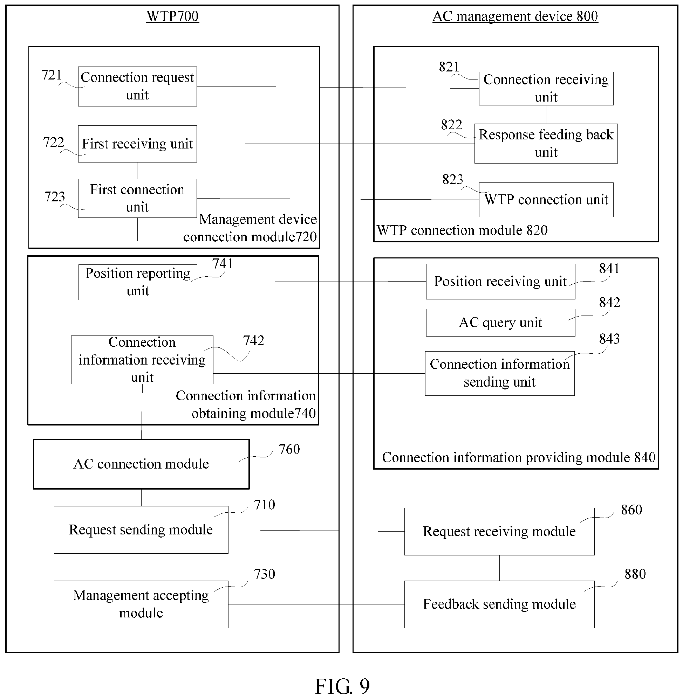

Please refer to FIG. 9, which shows a schematic structure diagram of a WTP access system according to an embodiment of the present invention. The WTP access system includes: at least one WTP 700, and at least one AC management device 800;
The WTP 700 includes a WTP access apparatus, where the WTP access apparatus includes: a management device connection module 720, a connection information obtaining module 740 and an AC connection module 760; and
The AC management device 800 includes a WTP management apparatus, where the WTP management apparatus includes: a WTP connection module 820, and a connection information providing module 840;
The management device connection module 720 is configured to establish a connection with an AC management deivce via a unique network address, where the AC management deivce is used for managing at least one access controller AC;
The connection information obtaining module 740 is configured to obtain connection information of the at least one AC from the AC management device after the connection is established between the WTP and the AC management device via the management device connection module 720; and
The AC connection module 760 is configured to establish a connection with the at least one AC according to the connection information obtained by the connection information obtaining module 740.

The WTP connection module 820 is configured to establish a connection with the wireless termination point WTP via the unique network address; and
The connection information providing module 840 is configured to provide connection information of at least one AC to the WTP via the WTP connection module 820, so that the WTP establishes the connection with the at least one AC according to the obtained connection information.

Specifically, the management device connection module 720 further includes: a connection request unit 721, a first receiving unit 722 and a first connection unit 723;
The connection request unit 721 is configured to send the connection request to the AC management device via the unique network address;
The first receiving unit 722 is configured to receive a connection response fed back by the AC management device in response to the connection request sent by the connection request unit 721; and
The first connection unit 723 is configured to establish, after the connection response is received by the first receiving unit 722, the connection with the AC management device via an extended tunnel of control and provisioning of wireless access point protocol CAPWAP.

Specifically, the WTP connection module 820, further includes: a connection receiving unit 821, a response feeding back unit 822 and a WTP connection unit 823;
The connection receiving unit 821 is configured to receive the connection request sent by the WTP via the unique network address and through the connection request unit 721;
The response feeding back unit 822 is configured to feed back, after the connection request is received by the connection receiving unit 821, a connection response to the first receiving unit 722 of the WTP; and
The WTP connection unit 823 is configured to establish, after the connection response which is fed back by the response feeding back unit 822 is received by the WTP, a connection with the WTP via an extended tunnel of control and provisioning of wireless access point protocol CAPWAP.

Where, the connection information obtaining module 740, furher includes: a position reporting unit 741 and a connection information receiving unit 742;
The position reporting unit 741 is configured to report geographic position of the WTP to the AC management device connected to the management device connection module 720; and
The connection information receiving unit 742 is configured to receive the connection information of the at least one AC fed back by the AC management device, where management area of each of the at least one AC covers the geographic position of the WTP, and where the connection information includes at least one of a static address, a broadcast address, identification information and DNS information.

Specifically, the connection information providing module 840 furher includes: a position receiving unit 841, an AC query unit 842 and a connection information sending unit 843;
The position receiving unit 841 is configured to receive geographic position of the WTP reported by the position reporting unit 741 of the WTP;
The AC query unit 842 is configured to look for at least one AC of which the management area covers the geographic position of the WTP; and
The connection information sending unit 843 is configured to send the connection information of the at least one AC that has been found to the WTP, where the connection information includes at least one of a static address, a broadcast address, identification information and DNS information.

For supplementary specification, if the WTP 700 does not obtain the connection information of any AC from the AC management device, or if the WTP 700 cannot establish a connection with any AC after the connection information of the at least one AC is obtained, the WTP 700 further includes: a request sending module 710 and a management accepting module 730;
the request sending module 710 is configured to send a requesting for management request to the AC management device; and
the management accepting module 730 is configured to accept management from the AC management device after receiving an response message from the AC management device in response to the requesting for management request sent by the request sending module 710.

In view of above, in the WTP access system provided in the embodiment of the present invention, a connection with the AC management device is established via a unique network address, where the AC management device is used for managing at least one access controller AC; and the AC management device provides the connection information of at least one AC to the WTP, so that the WTP establishes a connection with the at least one AC according to the obtained connection information; the problem in the prior art that it is difficult for the WTP to obtain the prior information and the initialization conditions related to the AC is solved, and the effects that the WTP can discover an AC and establish a connection with the AC via an AC management device are achieved.

In addition, through the request sending module 710 and the management accepting module 730, the effects that the WTP may accept management from the AC management device even when the WTP cannot establish a connection with any AC can be achieved.

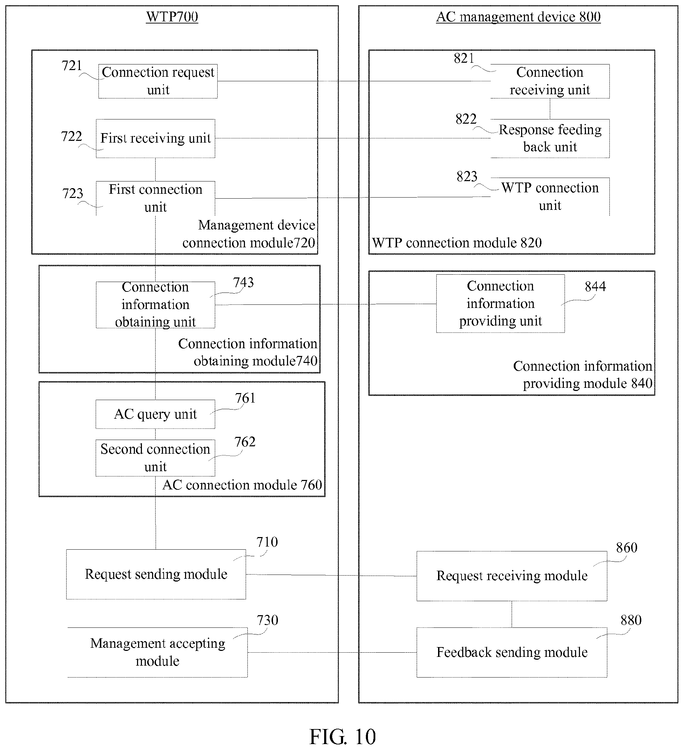

Please refer to FIG. 10, which shows a schematic structure diagram of a WTP access system according to another embodiment of the present invention. The WTP access system includes: at least one WTP 700, and at least one AC management device 800;
The WTP 700 includes a WTP access apparatus, where the WTP access apparatus includes: a management device connection module 720, a connection information obtaining module 740 and an AC connection module 760; and
The AC management device 800 includes a WTP management apparatus, where the WTP management apparatus includes: a WTP connection module 820, and a connection information providing module 840;
The management device connection module 720 is configured to establish a connection with an AC management deivce via a unique network address, where the AC management deivce is used for managing at least one access controller AC;
Specifically, the management device connection module 720 further includes: a connection request unit 721, a first receiving unit 722 and a first connection unit 723;
The connection request unit 721 is configured to send the connection request to the AC management device via the unique network address;
The first receiving unit 722 is configured to receive a connection response fed back by the AC management device in response to the connection request sent by the connection request unit 721; and
The first connection unit 723 is configured to establish, after the connection response is received by the first receiving unit 722, the connection with the AC management device via an extended tunnel of control and provisioning of wireless access point protocol CAPWAP.

The WTP connection module 820 is configured to establish a connection with the wireless termination point WTP via the unique network address;
Specifically, the WTP connection module 820, further includes: a connection receiving unit 821, a response feeding back unit 822 and a WTP connection unit 823;
The connection receiving unit 821 is configured to receive the connection request sent by the connection request unit 721 of the WTP 700 via the unique network address;
The response feeding back unit 822 is configured to feed back, after the connection request is received by the connection receiving unit 821, a connection response to the WTP; and
The WTP connection unit 823 is configured to establish, after the connection response which is fed back by the response feeding back unit 822 is received by the WTP, a connection with the WTP via an extended tunnel of control and provisioning of wireless access point protocol CAPWAP.

The connection information obtaining module 740 is configured to obtain connection information of the at least one AC from the AC management device after the connection is established between the WTP and the AC management device via the management device connection module 720;

Specifically, the connection information obtaining module740 includes a connection information obtaining unit 743;

The connection information obtaining unit 743 is configured to obtain connection information and management area of the at least one AC from the AC management device connected to the management device connection module 720, where the connection information includes at least one of a static address, a broadcast address, identification information and DNS information; and
where the at least one AC includes all ACs managed by the AC management device; or,
where the at least one AC includes n ACs managed by the AC management device, and where n is a preset threshold.

The AC connection module 760 is configured to establish connection with the at least one AC according to the connection information obtained by the obtaining module 740.

The connection information providing module 840 is configured to provide connection information of the at least one AC to the WTP through the WTP connection module 820, so that the WTP establishes the connection with the at least one AC according to the obtained connection information.

Specifically, the connection information providing module 840 further includes: a connection information providing unit 844;
The connection information providing unit 844 is configured to provide the connection information and the management area of the at least one AC to the WTP, where the connection information comprises at least one of a static address, a broadcast address, identification information and DNS information; and, where the at least one AC includes all ACs managed by the AC management device; or, where the at least one AC includes n ACs managed by the AC management device, and where n is a preset threshold.
The AC connection module 760 further includes: an AC query unit 761 and a second connection unit 762;
The AC query unit 761 is configured to look for, according to the geographic position of the WTP and the management area of each AC, at least one AC of which the management area covers the geographic position of the WTP in the connection information of the at least one AC provided by the connection information providing unit 844; and
The second connection unit 762 is configured to establish the connection with the at least one AC according to the connection information that has been found by the AC query unit 761.

For supplementary specification, if the WTP 700 does not obtain the connection information of any AC from the AC management device, or if the WTP 700 cannot establish a connection with any AC after the connection information of the at least one AC is obtained, the WTP 700 further includes: a request sending module 710 and a management accepting module 730;
The request sending module 710 is configured to send a requesting for management request to the AC management device; and
The management accepting module 730 is configured to accept management from the AC management device after receiving an response message from the AC management device in response to the requesting for management request sent by the request sending module 710;
The AC management device 800 further includes: a request receiving module 860 and a feedback sending module 880;
The request receiving module 860 is configured to receive the requesting for management request sent by the WTP through the WTP connection unit 820, where the request is sent to the AC management device by the WTP 700 when the WTP 700 does not obtain connection information of any AC from the AC management device, or when the WTP 700 cannot establish a connection with any AC after the connection information of the at least one AC is obtained; and
The feedback sending module 880 is configured to send an response message in response to the requesting for management request to the WTP after the requesting for management request is received by the request receiving module 860, so that the WTP accepts management from the AC management device after receiving the response message from the AC management device in response to the requesting for management request.

In view of above, in the WTP access system provided in the embodiment of the present invention, a connection with the AC management device is established via a unique network address, where the AC management device is used for managing at least one access controller AC; and the AC management device provides the connection information of at least one AC to the WTP, so that the WTP establishes a connection with the at least one AC according to the connection information of the at least one AC; the problem in the prior art that it is difficult for the WTP to obtain the prior information and the initialization conditions related to the AC is solved, and the effects that the WTP can discover an AC and establish a connection with the AC via an AC management device are achieved.

In addition, through the request receiving module 860 and the feedback sending module 880, the effects that the WTP may accept management from the AC management device even when the WTP cannot establish a connection with any AC can be achieved.

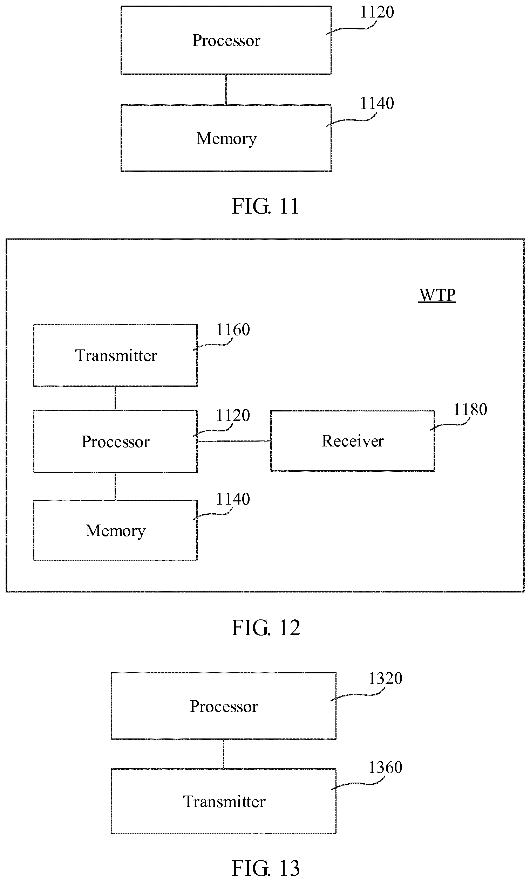

Please refer to FIG. 11, which shows a schematic structure diagram of a WTP according to an embodiment of the present invention. This WTP is applied to a system including at least one WTP, an AC management device and at least one AC, where the AC management device is used for managing the at least one AC, and the WTP includes: a processor 1120, and a memory 1140;
the processor1120 is configured to establish a connection with the AC management deivce via a unique network address, where the AC management deivce is used for managing the at least one access controller AC;
the processor 1120 is further configured to obtain connection information of the at least one AC from the AC management device; and
the processor 1120 is further configured to establish a connection with the at least one AC according to the obtained connection information.

Please refer to FIG. 12, which shows a schematic structure diagram of the WTP according to another embodiment of the present invention. This WTP is applied to a system including at least one WTP, an AC management device and at least one AC, where the AC management device is used for managing the at least one AC, and the WTP includes: a processor 1120, a memory 1140, a transmitter 1160 and a receiver 1180;

The processor1120 is configured to a establish connection with the AC management deivce via a unique network address, where the AC management deivce is used for managing at least one access controller AC;

Specifically:
the processor 1120 is further configured to control the transmitter 1160 to send a connection request to the AC management device via the unique network address;
the processor 1120 is further configured to control the receiver 1180 to receive a connection response fed back by the AC management device;
The processor 1120 is further configured to establish an extended tunnel connection of control and provisioning of wireless access point protocol CAPWAP after the connection response is received.

The processor 1120 is further configured to obtain the connection information of the at least one AC from the AC management device;

Specifically:
the processor 1120 is further configured to control the transmitter 1160 to report geographic position of the WTP to the AC management device; and
the processor 1120 is further configured to control the receiver 1180 to receive the connection information of the at least one AC fed back by the AC management device, where management area of each of the at least one AC covers the geographic position of the WTP, and where the connection information includes at least one of a static address, a broadcast address, identification information and DNS information.

In addition, it includes but is not limited to:
the processor 1120 is further configured to control the memory 1140 to store the connection information and the management area of the at least one AC obtained from the AC management device, where the connection information includes at least one of a static address, a broadcast address, identification information and DNS information; and where the at least one AC includes all ACs managed by the AC management device; or, where the at least one AC includes n ACs managed by the AC management device, and where n is a preset threshold.

The processor 1120 is further configured to look for, according to the geographic position of the WTP and the management area of each AC, at least one AC of which the management area covers the geographic position of the WTP in the at least one AC; and
the processor 1120 is further configured to establish the connection with the at least one AC according to the connection information that has been found.

The processor 1120 is further configured to establish the connection with the at least one AC according to the connection information of the AC.

Besides:
If the processor 1120 cannot obtain connection information of any AC from the AC management device, or the processor 1120 cannot establish a connection with any AC after the connection information of the at least one AC is obtained, the processor 1120 is further configured to control the transmitter 1160 to send a requesting for management request to the AC management device;
The processor 1120 is further configured to accept management from the AC management device after an response message in response to the requesting for management request is received from the AC management device.

Please refer to FIG. 13, which shows a schematic structure diagram of an AC management device according to an embodiment of the present invention. This AC management device is applied to a system including at least one WTP, an AC management device and at least one AC, where the AC management device is used for managing the at least one AC, and the AC management device includes: a processor 1320 and a transmitter 1360;
The processor 1320 is configured to establish a connection with a wireless termination point WTP via a unique network address; and
the processor 1320 is further configured to control the transmitter 1360 to provide connection information of at least one AC to the WTP, so that the WTP establishes a connection with the at least one AC according to the obtained connection information.

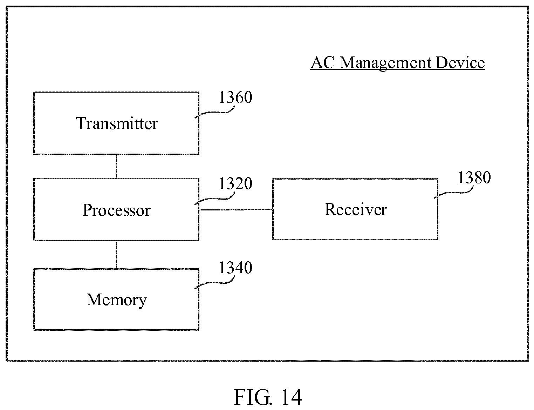

Please refer to FIG. 14, which shows a schematic structure diagram of an AC management device according to another embodiment of the present invention. This AC management device is applied to a system including at least one WTP, an AC management device and at least one AC, where the AC management device is used for managing the at least one AC, and the AC management device includes: a processor 1320, a memory 1340, a transmitter 1360, and a receiver 1380;
The processor 1320 is configured to establish a connection with a wireless termination point WTP via a unique network address;
Specifically:
the processor 1320 is further configured to control the receiver 1380 to receive the connection request sent by the WTP via the unique network address;
the processor 1320 is further configured tocontrol the transmitter 1360 to feed back a connection response to the WTP after the connection request is received; and
the processor 1320 is further configured to establish an extended tunnel connection of control and provisioning of wireless access point protocol CAPWAP after the connection response is received by the WTP.

The processor 1320 is further configured to control the transmitter 1360 to provide the connection information of the at least one AC to the WTP, so that the WTP establishes the connection with the at least one AC according to the obtained connection information of the at least one AC.

Specifically, it further includes:
The processor 1320 is further configured to control the receiver 1360 to receive geographic position of the WTP reported by the WTP;
The processor 1320 is further configured to look for at least one AC of which the management area covers the geographic position of the WTP; and
The processor 1320 is further configured to control the transmitter 1360 to send the connection information of the at least one AC that has been found to the WTP, where the connection information includes at least one of a static address, a broadcast address, identification information and DNS information.

The processor 1320 is further configured to control the transmitter 1360 to provide the connection information and management area of the at least one AC to the WTP, where the connection information includes at least one of a static address, a broadcast address, identification information and DNS information; and where the at least one AC includes all ACs managed by the AC management device; or, where the at least one AC includes n ACs managed by the AC management device, and where n is a preset threshold.

In addition, it further includes:
The processor 1320 is further configured to control the receiver 1380 to receive a requesting for management request sent by the WTP, wherein the request is sent to the AC management device by the WTP when the WTP does not obtain connection information of any AC from the AC management device, or when the WTP cannot stablish a connection with any AC after the connection information of the at least one AC is obtained; and
The processor 1320 is further configured to control the transmitter 1360 to send a response message in response to the requesting for management request to the WTP after the requesting for management request is received, so that the WTP accepts management from the AC management device after receiving the response message from the AC management device in response to the requesting for management request.

Those skilled in the art may understand that all or part of the steps in the embodiments may be implemented by hardware, and may also be implemented by a program instructing related hardware. The program may be stored in a computer readable storage medium, and the storage medium as mentioned above may be a read-only memory, a magnetic disk, or an optical disk, etc.

## Claims

1. A wireless termination point, WTP, access method, which is applied to a WTP, comprising:
establishing (501) a connection with an access controller, AC, management device via a unique network address, wherein the AC management device is an access control device which has a unique DNS domain name or a fixed IP address and is used for managing at least one AC;
reporting (503) geographic position of the WTP to the AC management device;
receiving (504) the connection information of the at least one AC fed back by the AC management device, wherein management area of each of the at least one AC covers the geographic position of the WTP, and wherein the connection information comprises at least one of a static address, a broadcast address, identification information and DNS information; and
establishing (505) a connection with the at least one AC according to the connection information that has been found.

2. The method according to claim 1, wherein the at least one AC comprises all ACs managed by the AC management device; or,
wherein the at least one AC comprises n ACs managed by the AC management device, and wherein n is a preset threshold.

3. A wireless termination point, WTP, access method, which is applied to a WTP, comprising:
establishing (601) a connection with an access controller, AC, management device via a unique network address, wherein the AC management device is an access control device which has a unique DNS domain name or a fixed IP address and is used for managing at least one AC;
receiving (602) the connection information and management area of the at least one AC fed back by the AC management device, wherein the connection information comprises at least one of a static address, a broadcast address, identification information and DNS information;
looking for (605), according to geographic position of the WTP and the management area of each of the at least one AC, at least one AC of which the management area covers the geographic position of the WTP in the at least one AC; and
establishing (606) a connection with the at least one AC according to the connection information that has been found.

4. The method according to claim 3, wherein the at least one AC comprises all ACs managed by the AC management device; or,
wherein the at least one AC comprises n ACs managed by the AC management device, and wherein n is a preset threshold.

5. A wireless termination point, WTP, management method, which is applied to an access controller, AC, management device, wherein the AC management device is an access control device which has a unique DNS domain name or a fixed IP address and is used for managing at least one AC, comprising:
establishing (402) a connection with a WTP via a unique network address;
receiving geographic position of the WTP reported by the WTP;
looking for at least one AC of which management area covers the geographic position of the WTP; and
providing connection information of the at least one AC to the WTP, wherein the connection information comprises at least one of a static address, a broadcast address, identification information and DNS information.

6. The method according to claim 5, wherein the at least one AC comprises all ACs managed by the AC management device; or,
wherein the at least one AC comprises n ACs managed by the AC management device, and wherein n is a preset threshold.

7. A wireless termination point, WTP, management method, which is applied to an access controller, AC, management device, wherein the AC management device is an access control device which has a unique DNS domain name or a fixed IP address and is used for managing at least one AC, comprising:
establishing (402) a connection with a WTP via a unique network address; and
providing connection information and management area of the at least one AC to the WTP, wherein the connection information comprises at least one of a static address, a broadcast address, identification information and DNS information.

8. The method according to claim 7, wherein the at least one AC comprises all ACs managed by the AC management device; or,
wherein the at least one AC comprises n ACs managed by the AC management device, and wherein n is a preset threshold.

9. A wireless termination point, WTP, access apparatus, which is applied to a WTP, comprising:
a management device connection module (720), configured to establish a connection with an access controller, AC, management device via a unique network address, wherein the AC management device is an access control device which has a unique DNS domain name or a fixed IP address and is used for managing at least one AC;
a connection information obtaining module (740) comprising a position reporting unit (741) and a connection information receiving unit (742), wherein the position reporting unit (741) is configured to report geographic position of the WTP to the AC management device connected to the management device connection module (720), and the connection information receiving unit (742) is configured to receive the connection information of the at least one AC fed back by the AC management device, wherein management area of each of the at least one AC covers the geographic position of the WTP, and wherein the connection information comprises at least one of a static address, a broadcast address, identification information and DNS information; and
an AC connection module (760) comprising a second connection unit (762), wherein the second connection unit (762) is configured to establish a connection with the at least one AC according to the connection information that has been found.

10. The apparatus according to claim 9, wherein the at least one AC comprises all ACs managed by the AC management device; or,
wherein the at least one AC comprises n ACs managed by the AC management device, and wherein n is a preset threshold.

11. A wireless termination point, WTP, access apparatus, which is applied to a WTP, comprising:
a management device connection module (720), configured to establish a connection with an access controller, AC, management device via a unique network address, wherein the AC management device is an access control device which has a unique DNS domain name or a fixed IP address and is used for managing at least one AC;
a connection information obtaining module (740) comprising a connection information receiving unit (742), wherein the connection information receiving unit (742) is configured to receive the connection information and management area of the at least one AC fed back by the AC management device, wherein the connection information comprises at least one of a static address, a broadcast address, identification information and DNS information; and
an AC connection module (760) comprising an AC query unit (761) and a second connection unit (762), wherein the AC query unit (761) is configured to look for, according to geographic position of the WTP and the management area of each of the at least one AC, at least one AC of which the management area covers the geographic position of the WTP in the at least one AC; and the second connection unit (762) is configured to establish a connection with the at least one AC according to the connection information that has been found.

12. The apparatus according to claim 11, wherein the at least one AC comprises all ACs managed by the AC management device; or,
wherein the at least one AC comprises n ACs managed by the AC management device, and wherein n is a preset threshold.

13. A wireless termination point, WTP, management apparatus, which is applied to an access controller, AC, management device, wherein the AC management device is an access control device which has a unique DNS domain name or a fixed IP address and is used for managing at least one AC, comprising:
a WTP connection module (820), configured to establish a connection with a WTP via a unique network address; and
a connection information providing module (840) comprising a position receiving unit (841), an AC query unit (842), and a connection information providing unit (844), wherein the position receiving unit (841) is configured to receive geographic position of the WTP reported by the WTP connected to the WTP connection module (820), the AC query unit (842) is configured to look for at least one AC of which management area covers the geographic position of the WTP, and the connection information providing unit (844) is configured to provide the connection information of the at least one AC to the WTP connected to the WTP connection module (820), wherein the connection information comprises at least one of a static address, a broadcast address, identification information and DNS information.

14. The apparatus according to claim 13,
wherein the at least one AC comprises all ACs managed by the AC management device; or,
wherein the at least one AC comprises n ACs managed by the AC management device, and wherein n is a preset threshold.

15. A wireless termination point, WTP, management apparatus, which is applied to an access controller, AC, management device, wherein the AC management device is an access control device which has a unique DNS domain name or a fixed IP address and is used for managing at least one AC, comprising:
a WTP connection module (820), configured to establish a connection with a WTP via a unique network address; and
a connection information providing module (840) comprising a connection information providing unit (844), wherein the connection information providing unit (844) is configured to provide the connection information and management area of the at least one AC to the WTP connected to the WTP connection module (820), wherein the connection information comprises at least one of a static address, a broadcast address, identification information and DNS information.

16. The apparatus according to claim 15,
wherein the at least one AC comprises all ACs managed by the AC management device; or,
wherein the at least one AC comprises n ACs managed by the AC management device, and wherein n is a preset threshold.

17. A wireless termination point, WTP, accesss system, comprising: at least one WTP (700), an access controller, AC, management device (800) and at least one AC, wherein the AC management device (800) is an access control device which has a unique DNS domain name or a fixed IP address and is used for managing the at least one AC; wherein,
the WTP (700) comprises a WTP accesss apparatus according to claim 9 or 10; and
the AC management device (800) comprises a WTP management apparatus according to claim 13 or 14.

18. A wireless termination point, WTP, accesss system, comprising: at least one WTP (700), an access controller, AC, management device (800) and at least one AC, wherein the AC management device (800) is an access control device which has a unique DNS domain name or a fixed IP address and is used for managing the at least one AC; wherein,
the WTP (700) comprises a WTP accesss apparatus according to claim 11 or 12; and
the AC management device (800) comprises a WTP management apparatus according to claim 15 or 16.

## Patentansprüche

1. Zugangsverfahren für einen drahtlosen Abschlusspunkt, WTP, das auf einen WTP angewendet wird und Folgendes umfasst:
Herstellen (501) einer Verbindung mit einer Zugangssteuerungs(AC)-Verwaltungsvorrichtung via eine eindeutige Netzwerkadresse, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird;
Melden (503) einer geografischen Position des WTP an eine AC-Verwaltungsvorrichtung;
Empfangen (504) der Verbindungsinformationen der mindestens einen AC, die von der AC-Verwaltungsvorrichtung rückgemeldet werden, wobei ein Verwaltungsbereich von jeder der mindestens einen AC die geografische Position des WTP abdeckt und wobei die Verbindungsinformationen mindestens eines von einer statischen Adresse, einer Broadcastadresse, von Identifikationsinformationen und von DNS-Informationen umfassen; und
Herstellen (505) einer Verbindung mit der mindestens einen AC gemäß den Verbindungsinformationen, die gefunden wurden.

2. Verfahren nach Anspruch 1, wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

3. Zugangsverfahren für einen drahtlosen Abschlusspunkt, WTP, das auf einen WTP angewendet wird und Folgendes umfasst:
Herstellen (601) einer Verbindung mit einer Zugangssteuerungs(AC)-Verwaltungsvorrichtung via eine eindeutige Netzwerkadresse, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird;
Empfangen (602) der Verbindungsinformationen und des Verwaltungsbereichs der mindestens einen AC, die von der AC-Verwaltungsvorrichtung rückgemeldet werden, wobei die Verbindungsinformationen mindestens eines von einer statischen Adresse, einer Broadcastadresse, von Identifikationsinformationen und von DNS-Informationen umfassen;
Suchen nach (605) mindestens einer AC, deren Verwaltungsbereich die geografische Position des WTP in der mindestens einen AC abdeckt, gemäß einer geografischen Position des WTP und dem Verwaltungsbereich von jeder der mindestens einen AC und
Herstellen (606) einer Verbindung mit der mindestens einen AC gemäß den Verbindungsinformationen, die gefunden wurden.

4. Verfahren nach Anspruch 3, wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

5. Verwaltungsverfahren für einen drahtlosen Abschlusspunkt, WTP, das auf eine Zugangssteuerungs(AC)-Verwaltungsvorrichtung angewendet wird, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird, das Folgendes umfasst:
Herstellen (402) einer Verbindung mit einem WTP via eine eindeutige Netzwerkadresse;
Empfangen einer geografischen Position des WTP, die vom WTP gemeldet wird;
Suchen nach mindestens einer AC, deren Verwaltungsbereich die geografische Position des WTP abdeckt; und
Bereitstellen von Verbindungsinformationen der mindestens einen AC für den WTP, wobei die Verbindungsinformationen mindestens eines von einer statischen Adresse, einer Broadcastadresse, von Identifikationsinformationen und von DNS-Informationen umfassen.

6. Verfahren nach Anspruch 5, wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

7. Verwaltungsverfahren für einen drahtlosen Abschlusspunkt, WTP, das auf eine Zugangssteuerungs(AC)-Verwaltungsvorrichtung angewendet wird, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird, das Folgendes umfasst:
Herstellen (402) einer Verbindung mit einem WTP via eine eindeutige Netzwerkadresse und
Bereitstellen von Verbindungsinformationen und eines Verwaltungsbereichs der mindestens einen AC für den WTP, wobei die Verbindungsinformationen mindestens eines von einer statischen Adresse, einer Broadcastadresse, von Identifikationsinformationen und von DNS-Informationen umfassen.

8. Verfahren nach Anspruch 7, wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

9. Zugangseinrichtung für einen drahtlosen Abschlusspunkt, WTP, die auf einen WTP angewendet wird und Folgendes umfasst:
ein Verwaltungsvorrichtungsverbindungsmodul (720), das dazu ausgelegt ist, via eine eindeutige Netzwerkadresse eine Verbindung mit einer Zugangssteuerungs(AC)-Verwaltungsvorrichtung herzustellen, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird;
ein Verbindungsinformationserhaltungsmodul (740), das eine Positionsmeldeeinheit (741) und eine Verbindungsinformationsempfangseinheit (742) umfasst, wobei die Positionsmeldeeinheit (741) dazu ausgelegt ist, eine geografische Position des WTP an die AC-Verwaltungsvorrichtung, die mit dem Verwaltungsvorrichtungsverbindungsmodul (720) verbunden ist, zu melden, und die Verbindungsinformationsempfangseinheit (742) dazu ausgelegt ist, die Verbindungsinformationen der mindestens einen AC, die von der AC-Verwaltungsvorrichtung rückgemeldet werden, zu empfangen, wobei ein Verwaltungsbereich von jeder der mindestens einen AC die geografische Position des WTP abdeckt und wobei die Verbindungsinformationen mindestens eines von einer statischen Adresse, einer Broadcastadresse, von Identifikationsinformationen und von DNS-Informationen umfassen; und
ein AC-Verbindungsmodul (760), das eine zweite Verbindungseinheit (762) umfasst, wobei die zweite Verbindungseinheit (762) dazu ausgelegt ist, gemäß den Verbindungsinformationen, die gefunden wurden, eine Verbindung mit der mindestens einen AC herzustellen.

10. Einrichtung nach Anspruch 9, wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

11. Zugangseinrichtung für einen drahtlosen Abschlusspunkt, WTP, die auf einen WTP angewendet wird und Folgendes umfasst:
ein Verwaltungsvorrichtungsverbindungsmodul (720), das dazu ausgelegt ist, via eine eindeutige Netzwerkadresse eine Verbindung mit einer Zugangssteuerungs(AC)-Verwaltungsvorrichtung herzustellen, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird;
ein Verbindungsinformationserhaltungsmodul (740), das eine Verbindungsinformationsempfangseinheit (742) umfasst, wobei die Verbindungsinformationsempfangseinheit (742) dazu ausgelegt ist, die Verbindungsinformationen und den Verwaltungsbereich der mindestens einen AC, die von der AC-Verwaltungsvorrichtung rückgemeldet werden, zu empfangen, wobei die Verbindungsinformationen mindestens eines von einer statischen Adresse, einer Broadcastadresse, von Identifikationsinformationen und von DNS-Informationen umfassen; und
ein AC-Verbindungsmodul (760), das eine AC-Abfrageeinheit (761) und eine zweite Verbindungseinheit (762) umfasst, wobei die AC-Abfrageeinheit (761) dazu ausgelegt ist, nach mindestens einer AC, deren Verwaltungsbereich die geografische Position des WTP in der mindestens einen AC abdeckt, gemäß einer geografischen Position des WTP und dem Verwaltungsbereich von jeder der mindestens einen AC zu suchen; und die zweite Verbindungseinheit (762) dazu ausgelegt ist, gemäß den Verbindungsinformationen, die gefunden wurden, eine Verbindung mit der mindestens einen AC herzustellen.

12. Einrichtung nach Anspruch 11, wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

13. Verwaltungseinrichtung für einen drahtlosen Abschlusspunkt, WTP, die auf eine Zugangssteuerungs(AC)-Verwaltungsvorrichtung angewendet wird, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird, die Folgendes umfasst:
ein WTP-Verbindungsmodul (820), das dazu ausgelegt ist, eine Verbindung mit einem WTP via eine eindeutige Netzwerkadresse herzustellen, und
ein Verbindungsinformationsbereitstellungsmodul (840), das eine Positionsempfangseinheit (841), eine AC-Abfrageeinheit (842) und eine Verbindungsinformationsbereitstellungseinheit (844) umfasst, wobei die Positionsempfangseinheit (841) dazu ausgelegt ist, eine geografische Position des WTP, die vom WTP, der mit dem WTP-Verbindungsmodul (820) verbunden ist, rückgemeldet wird, zu empfangen, die AC-Abfrageeinheit (842) dazu ausgelegt ist, nach mindestens einer AC zu suchen, deren Verwaltungsbereich die geografische Position des WTP abdeckt, und die Verbindungsinformationsbereitstellungseinheit (844) dazu ausgelegt ist, die Verbindungsinformationen der mindestens einen AC dem WTP bereitzustellen, der mit dem WTP-Verbindungsmodul (820) verbunden ist, wobei die Verbindungsinformationen mindestens eines von einer statischen Adresse, einer Broadcastadresse, von Identifikationsinformationen und von DNS-Informationen umfassen.

14. Einrichtung nach Anspruch 13,
wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

15. Verwaltungseinrichtung für einen drahtlosen Abschlusspunkt, WTP, die auf eine Zugangssteuerungs(AC)-Verwaltungsvorrichtung angewendet wird, wobei die AC-Verwaltungsvorrichtung eine Zugangssteuervorrichtung ist, die einen eindeutigen DNS-Domänennamen oder eine feste IP-Adresse aufweist und zum Verwalten von mindestens einer AC verwendet wird, die Folgendes umfasst:
ein WTP-Verbindungsmodul (820), das dazu ausgelegt ist, eine Verbindung mit einem WTP via eine eindeutige Netzwerkadresse herzustellen, und
ein Verbindungsinformationsbereitstellungsmodul (840), das eine Verbindungsinformationsbereitstellungseinheit (844) umfasst, wobei die Verbindungsinformationsbereitstellungseinheit (844) dazu ausgelegt ist, dem WTP,
der mit dem WTP-Verbindungsmodul (820) verbunden ist, die Verbindungsinformationen und den Verwaltungsbereich der mindestens einen AC bereitzustellen, wobei die Verbindungsinformationen mindestens eines von einer statischen Adresse, einer Broadcastadresse, von Identifikationsinformationen und von DNS-Informationen umfassen.

16. Einrichtung nach Anspruch 15,
wobei die mindestens eine AC alle ACs umfasst, die von der AC-Verwaltungsvorrichtung verwaltet werden; oder
wobei die mindestens eine AC n ACs umfasst, die von der AC-Verwaltungsvorrichtung verwaltet werden, und wobei n ein voreingestellter Schwellwert ist.

17. Zugangssystem für einen drahtlosen Abschlusspunkt, WTP, das Folgendes umfasst:
mindestens einen WTP (700), eine Zugangssteuerungs(AC)-Verwaltungsvorrichtung (800) und mindestens eine AC, wobei die AC-Verwaltungsvorrichtung (800) eine Zugangssteuervorrichtung ist, die einen eindeutigen DNS-Domänennamen oder eine feste IP-Adresse aufweist und zum Verwalten der mindestens einen AC verwendet wird; wobei
der WTP (700) eine WTP-Zugangseinrichtung nach Anspruch 9 oder 10 umfasst und die AC-Verwaltungsvorrichtung (800) eine WTP-Verwaltungseinrichtung nach Anspruch 13 oder 14 umfasst.

18. Zugangssystem für einen drahtlosen Abschlusspunkt, WTP, das Folgendes umfasst:
mindestens einen WTP (700), eine Zugangssteuerungs(AC)-Verwaltungsvorrichtung (800) und mindestens eine AC, wobei die AC-Verwaltungsvorrichtung (800) eine Zugangssteuervorrichtung ist, die einen eindeutigen DNS-Domänennamen oder eine feste IP-Adresse aufweist und zum Verwalten der mindestens einen AC verwendet wird; wobei
der WTP (700) eine WTP-Zugangseinrichtung nach Anspruch 11 oder 12 umfasst und
die AC-Verwaltungsvorrichtung (800) eine WTP-Verwaltungseinrichtung nach Anspruch 15 oder 16 umfasst.

## Revendications

1. Procédé d'accès de point de terminaison sans fil, noté WTP, appliqué à un WTP, comprenant :
l'établissement (501) d'une connexion avec un dispositif de gestion de contrôleur d'accès, noté AC, par le biais d'une adresse réseau unique, le dispositif de gestion d'AC consistant en un dispositif de contrôle d'accès possédant un nom de domaine DNS unique ou une adresse IP fixe et servant à la gestion d'au moins un AC ;
la notification (503) d'une position géographique du WTP au dispositif de gestion d'AC ;
la réception (504) des informations de connexion de l'au moins un AC renvoyées par le dispositif de gestion d'AC, une zone de gestion de chacun de l'au moins un AC couvrant la position géographique du WTP, et les informations de connexion comprenant une adresse statique et/ou une adresse de diffusion et/ou des informations d'identification et/ou des informations de DNS ; et
l'établissement (505) d'une connexion avec l'au moins un AC selon les informations de connexion qui ont été trouvées.

2. Procédé selon la revendication 1, dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

3. Procédé d'accès de point de terminaison sans fil, noté WTP, appliqué à un WTP, comprenant :
l'établissement (601) d'une connexion avec un dispositif de gestion de contrôleur d'accès, noté AC, par le biais d'une adresse réseau unique, le dispositif de gestion d'AC consistant en un dispositif de contrôle d'accès possédant un nom de domaine DNS unique ou une adresse IP fixe et servant à la gestion d'au moins un AC ;
la réception (602) des informations de connexion et d'une zone de gestion de l'au moins un AC renvoyées par le dispositif de gestion d'AC, les informations de connexion comprenant une adresse statique et/ou une adresse de diffusion et/ou des informations d'identification et/ou des informations de DNS ;
la recherche (605), selon une position géographique du WTP et la zone de gestion de chacun de l'au moins un AC, d'au moins un AC dont la zone de gestion couvre la position géographique du WTP dans l'au moins un AC ; et
l'établissement (606) d'une connexion avec l'au moins un AC selon les informations de connexion qui ont été trouvées.

4. Procédé selon la revendication 3, dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

5. Procédé de gestion de point de terminaison sans fil, noté WTP, appliqué à un dispositif de gestion de contrôleur d'accès, noté AC, le dispositif de gestion d'AC consistant en un dispositif de contrôle d'accès possédant un nom de domaine DNS unique ou une adresse IP fixe et servant à la gestion d'au moins un AC, comprenant :
l'établissement (402) d'une connexion avec un WTP par le biais d'une adresse réseau unique ;
la réception d'une position géographique du WTP notifiée par le WTP ;
la recherche d'au moins un AC dont la zone de gestion couvre la position géographique du WTP ; et
la fourniture d'informations de connexion de l'au moins un AC au WTP, les informations de connexion comprenant une adresse statique et/ou une adresse de diffusion et/ou des informations d'identification et/ou des informations de DNS.

6. Procédé selon la revendication 5, dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

7. Procédé de gestion de point de terminaison sans fil, noté WTP, appliqué à un dispositif de gestion de contrôleur d'accès, noté AC, le dispositif de gestion d'AC consistant en un dispositif de contrôle d'accès possédant un nom de domaine DNS unique ou une adresse IP fixe et servant à la gestion d'au moins un AC, comprenant :
l'établissement (402) d'une connexion avec un WTP par le biais d'une adresse réseau unique ; et
la fourniture d'informations de connexion et d'une zone de gestion de l'au moins un AC au WTP, les informations de connexion comprenant une adresse statique et/ou une adresse de diffusion et/ou des informations d'identification et/ou des informations de DNS.

8. Procédé selon la revendication 7, dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

9. Appareil d'accès de point de terminaison sans fil, noté WTP, appliqué à un WTP, comprenant :
un module de connexion de dispositif de gestion (720), configuré pour établir une connexion avec un dispositif de gestion de contrôleur d'accès, noté AC, par le biais d'une adresse réseau unique, le dispositif de gestion d'AC consistant en un dispositif de contrôle d'accès possédant un nom de domaine DNS unique ou une adresse IP fixe et servant à la gestion d'au moins un AC ;
un module d'obtention d'informations de connexion (740) comprenant une unité de notification de position (741) et une unité de réception d'informations de connexion (742), l'unité de notification de position (741) étant configurée pour notifier une position géographique du WTP au dispositif de gestion d'AC connecté au module de connexion de dispositif de gestion (720), et l'unité de réception d'informations de connexion (742) étant configurée pour recevoir les informations de connexion de l'au moins un AC renvoyées par le dispositif de gestion d'AC, une zone de gestion de chacun de l'au moins un AC couvrant la position géographique du WTP, et les informations de connexion comprenant une adresse statique et/ou une adresse de diffusion et/ou des informations d'identification et/ou des informations de DNS ; et
un module de connexion d'AC (760) comprenant une deuxième unité de connexion (762), la deuxième unité de connexion (762) étant configurée pour établir une connexion avec l'au moins un AC selon les informations de connexion qui ont été trouvées.

10. Appareil selon la revendication 9, dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

11. Appareil d'accès de point de terminaison sans fil, noté WTP, appliqué à un WTP, comprenant :
un module de connexion de dispositif de gestion (720), configuré pour établir une connexion avec un dispositif de gestion de contrôleur d'accès, noté AC, par le biais d'une adresse réseau unique, le dispositif de gestion d'AC consistant en un dispositif de contrôle d'accès possédant un nom de domaine DNS unique ou une adresse IP fixe et servant à la gestion d'au moins un AC ;
un module d'obtention d'informations de connexion (740) comprenant une unité de réception d'informations de connexion (742), l'unité de réception d'informations de connexion (742) étant configurée pour recevoir les informations de connexion et une zone de gestion de l'au moins un AC renvoyées par le dispositif de gestion d'AC, les informations de connexion comprenant une adresse statique et/ou une adresse de diffusion et/ou des informations d'identification et/ou des informations de DNS ; et
un module de connexion d'AC (760) comprenant une unité d'interrogation d'AC (761) et une deuxième unité de connexion (762), l'unité d'interrogation d'AC (761) étant configuré pour rechercher, selon une position géographique du WTP et la zone de gestion de chacun de l'au moins un AC, au moins un AC dont la zone de gestion couvre la position géographique du WTP dans l'au moins un AC ; et la deuxième unité de connexion (762) étant configurée pour établir une connexion avec l'au moins un AC selon les informations de connexion qui ont été trouvées.

12. Appareil selon la revendication 11, dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

13. Appareil de gestion de point de terminaison sans fil, noté WTP, appliqué à un dispositif de gestion de contrôleur d'accès, noté AC, le dispositif de gestion d'AC consistant en un dispositif de contrôle d'accès possédant un nom de domaine DNS unique ou une adresse IP fixe et servant à la gestion d'au moins un AC, comprenant :
un module de connexion de WTP (820), configuré pour établir une connexion avec un WTP par le biais d'une adresse réseau unique ; et
un module de fourniture d'informations de connexion (840) comprenant une unité de réception de position (841), une unité d'interrogation d'AC (842) et une unité de fourniture d'informations de connexion (844), l'unité de réception de position (841) étant configurée pour recevoir une position géographique du WTP notifiée par le WTP connecté au module de connexion de WTP (820), l'unité d'interrogation d'AC (842) étant configurée pour rechercher au moins un AC dont la zone de gestion couvre la position géographique du WTP et l'unité de fourniture d'informations de connexion (844) étant configurée pour fournir les informations de connexion de l'au moins un AC au WTP connecté au module de connexion de WTP (820), les informations de connexion comprenant une adresse statique et/ou une adresse de diffusion et/ou des informations d'identification et/ou des informations de DNS.

14. Appareil selon la revendication 13,
dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

15. Appareil de gestion de point de terminaison sans fil, noté WTP, appliqué à un dispositif de gestion de contrôleur d'accès, noté AC, le dispositif de gestion d'AC consistant en un dispositif de contrôle d'accès possédant un nom de domaine DNS unique ou une adresse IP fixe et servant à la gestion d'au moins un AC, comprenant :
un module de connexion de WTP (820), configuré pour établir une connexion avec un WTP par le biais d'une adresse réseau unique ; et
un module de fourniture d'informations de connexion (840) comprenant une unité de fourniture d'informations de connexion (844), l'unité de fourniture d'informations de connexion (844) étant configurée pour fournir les informations de connexion et une zone de gestion de l'au moins un AC au WTP connecté au module de connexion de WTP (820), les informations de connexion comprenant une adresse statique et/ou une adresse de diffusion et/ou des informations d'identification et/ou des informations de DNS.

16. Procédé selon la revendication 15,
dans lequel l'au moins un AC comprend tous les AC gérés par le dispositif de gestion d'AC ; ou,
dans lequel l'au moins un AC comprend n AC gérés par le dispositif de gestion d'AC, et n est un seuil prédéfini.

17. Système d'accès de point de terminaison sans fil, noté WTP, comprenant : au moins un WTP (700), un dispositif de gestion de contrôleur d'accès, noté AC, (800) et au moins un AC, le dispositif de gestion d'AC (800) consistant en un dispositif de contrôle d'accès possédant un nom de domaine DNS unique ou une adresse IP fixe et servant à la gestion de l'au moins un AC ;
le WTP (700) comprenant un appareil d'accès de WTP selon la revendication 9 ou 10 ; et
le dispositif de gestion d'AC (800) comprenant un appareil de gestion de WTP selon la revendication 13 ou 14.

18. Système d'accès de point de terminaison sans fil, noté WTP, comprenant : au moins un WTP (700), un dispositif de gestion de contrôleur d'accès, noté AC, (800) et au moins un AC, le dispositif de gestion d'AC (800) consistant en un dispositif de contrôle d'accès possédant un nom de domaine DNS unique ou une adresse IP fixe et servant à la gestion de l'au moins un AC ;
le WTP (700) comprenant un appareil d'accès de WTP selon la revendication 11 ou 12 ; et
le dispositif de gestion d'AC (800) comprenant un appareil de gestion de WTP selon la revendication 15 ou 16.
